# EUROPEAN PATENT SPECIFICATION

(11) **EP 0 955 737 B1**
(45) Date of publication and mention of the grant of the patent: **06.05.2004**
(21) Application number: 99303591.4
(22) Date of filing: 07.05.1999
(51) Int. Cl.: H04B 7/185

(54) **A two-way/broadcast mobile and portable satellite communications system**
Tragbares mobiles Satelliten Kommunikationssystem für Rundfunk in zwei Richtungen
Système de communication par satellite portable et mobile pour diffusion dans deux sens

(30) Priority: 07.05.1998 US 74061
(43) Date of publication of application: 10.11.1999
(73) Proprietor: Loral Spacecom Corp., New York, NY 10016 (US)
(72) Inventor: Wiedeman, Robert, Los Altos, California 92024 (US)
(74) Representative: Ertl, Nicholas Justin

(56) References cited:
- WO-A-97/50249
- WO-A-98/18215
- US-A- 5 708 963
- US-A- 5 722 042

## Description

This invention relates generally to satellite communications systems and, more particularly, to a satellite communications system having a broadcasting space and terrestrial segment and a mobile communications space and terrestrial segment.

Cellular telephone services have been extended to remote parts of the Earth by the use of satellite techniques, thereby providing many new subscribers with access to various telephony services. These satellite-based systems can be regional GeoSynchronous (GSO), or global Non-Geo-Synchronous (NGSO). Iridium™ and Globalstar™ are two examples of global NGSO systems, and may be referred to as Global Mobile Satellite Systems (GMSS).

Direct to Home (DTH) services provide broadcasting services, such as television, that is typically transmitted by GSO satellites. In contrast, GMSS systems or Regional Mobile Satellite Systems (RMSS) are designed to be efficient, cellular-like communications systems which provide point-to-point voice and data communications for mobile and portable users. In order to maximize the number of subscribers on a GMSS system, the data rate throughput of a circuit provided to a subscriber is typically limited to relatively low speed data (e.g., 2400, 4800 or 9600 BPS) and also typically uses highly compressed digital speech. Time Division Multiple Access (TDMA) or Code Division Multiple Access (CDMA) techniques are typically used with these systems in order to place a number of users on the same RF channel.

The NGSO and GSO satellite systems have significantly different operational characteristics. For example, the propagation time delays for GMSS NGSO systems are on the order of about 9 ms to 100 ms, while encoding and decoding operations can contribute up to 100 ms of additional delay. With the higher altitude GSO satellites the propagation delay is 250 ms, plus an encoding and decoding delay that can increase the delay to 350 ms or more. Furthermore, the available bandwidth of MSS systems is limited due to the small amount of spectrum that has been allocated for this purpose. However, broadcasting satellite services have been optimized for full motion commercial television and high-speed data, and are characterized by high power down links which can provide service using 18 to 24 inch diameter dishes.

The analog or digital TV signals can be delivered by several means to an uplink station, referred to as a feeder link, which digitizes the signal (and optionally compresses the signal), and then transmits it to the GSO satellite. The GSO satellite translates the signal to another frequency, amplifies the signal, and broadcasts it to a wide service area where it is received nearly simultaneously by many receivers located in the service area. In addition to the above-mentioned propagation delay of 250 ms, a further delay may be incurred during a digital to analog conversion of the signal. The converted signal is then delivered to an ordinary television set or a high definition television set (HDTV). In general, the bandwidth available for these broadcast services is large, compared to that of GMSS.

Until now satellite cellular and satellite broadcast systems have developed in parallel, with each being optimized for its own purpose. Terrestrial wire line systems and wireless systems, such as cellular and personal communications systems, are being developed and optimized for transmission of voice and data, and in particular, transmission of personal computer data.

Meanwhile, the use of the Internet is becoming wide spread, with millions of subscribers currently being on-line. The merging of voice and data services with the Internet, as well as commercial television, is currently under development. In fact, it is expected that soon the conventional notion of the "dial tone" will be joined by a new concept called the "web tone".

It is anticipated that future MSS systems will use traditional communication methods combined with television (e.g. picture phone), and will also utilize the Internet or its successor. Personal computers, becoming ever smaller, more powerful, and faster will combine with wireless communications to provide an integrated communications and computer system. A common thread between these services is the subscriber, and the increasing utilization of wireless telephony, the personal computer, and the Internet by the subscriber.

However, the subscribers of mobile communications systems currently lag in the use of the Internet due to the inability of these systems to provide a high speed data circuit or channel to the subscriber. As a result, the subscriber experiences long delays in receiving responses of input data to subscriber requests. Subscribers to DTH systems, however, lag in the use of the Internet for mobiles and transportable users due to the inability to provide an uplink from the user to the broadcast satellite and thence to the transmitting station of an Internet Service Provider (ISP) or the TV provider. As a result, many users may currently have three or more individual subscriptions, one for cellular voice and low speed data, one for DTH television, and one for an Internet connection. Prior to this invention, there has not been a satisfactory solution to these and other problems.

US 5,708,963 discloses a method and apparatus for using satellites for reverse path communication in direct-to-home subscription information systems. WO 98/18215 discloses a broadcast system with a wireless request channel. WO 97/50249 discloses an interactive reverse channel for a direct broadcast satellite system. US 5,772,042 discloses a satellite communication system having a double-layered earth orbit satellite constellation with two different altitudes.

According to the present invention, there is provided a communications system, comprising:
a first satellite system providing a terrestrial service area with a broadcast communication service;
a second satellite system providing at least a portion of the terrestrial service area with a two-way communication service; and
a user terminal comprising a transceiver for requesting, through said second satellite system, broadcast communication service, and further comprising a receiver for receiving the requested broadcast communication service through said first satellite system, wherein
a bidirectional communications link is provided between said first satellite system and said second satellite system, and
said first satellite system includes a ground segment controller for using predetermined criteria to selectively route the requested broadcast communication service to said user terminal by transmitting the requested broadcast communication service on an uplink to a satellite (1) of said first satellite system for reception by said receiver, or by transmitting the requested broadcast communication service over said bidirectional link to said second satellite system for reception by said transceiver.

The invention also provides a method for providing data to a user terminal in a satellite-based communications system, comprising the steps of:
operating the user terminal to log in to the communications system using log in protocols of a non-geosynchronous orbit satellite communication system;
operating the user terminal to make a service request to the communications system using a service request protocol of the non-geosynchronous orbit satellite communication system; and
in response to the service request, establishing a link with a source of data that is coupled to a broadcast satellite communication system, wherein the method further comprises:
   using a predetermined criteria, selectively delivering data from the source of data to the user terminal through at least one satellite of the non-geosynchronous orbit satellite communication system or delivering data from the source of data to the user terminal through at least one satellite of the broadcast satellite communication system.

A hybrid satellite communications system employs at least two satellite-based systems that can be regional GSO and global NGSO. When combined in accordance with the teachings of this invention the hybrid system is enabled to serve, with a single architecture, the entire global community with optimized delay, high quality signals of many types.

In accordance with the teaching of this invention one or more broadcasting satellites at high altitude, such as GSO, are combined with a NGSO satellite system, such as a Low Earth Orbit (LEO) or a Medium Earth Orbit (MEO) system, to provide efficient access to Internet services, interactive television, and other services for mobile and fixed users.

The merging of the functionality of different satellite-based systems, particularly for mobile applications, provides a technique for identifying users and a technique for allowing users to access various networks. Further provided is an ability to charge reasonable amounts for access to bandwidth, and a multi-service capability with a single subscription. The satellite cellular system, with its highly developed mobile roaming identification, registration, and authentication system, provides a means for enabling a user, even when roaming, to access broadcast services.

Examples of the present invention will now be described in detail with reference to the accompanying drawings, in which:
Fig. 1 is a block diagram of a satellite communications system in accordance with a first embodiment of this invention;
Fig. 2 depicts a GSO and a NGSO satellite constellation serving geographically distributed terrestrial service areas, which are linked together through terrestrial data and voice communications networks;
Fig. 3 is a perspective view of an embodiment of a user terminal in accordance with an aspect of this invention;
Fig. 4 illustrates an embodiment of a vehicular user terminal in accordance with a further aspect of this invention;
Fig. 5 is a block diagram of a satellite communications system in accordance with a second embodiment of this invention;
Figs. 6A-6F each depict an embodiment of a system architecture and show relationships between the NGSO and the broadcast GSO satellite systems relative to a broadcast feederlink station, a gateway, and a user terminal ground segment;
Figs. 7A-7H each illustrate a mode of operation of the broadcast communications system;
Fig. 8 is a block diagram of the broadcast feederlink station shown in Figs. 1 and 5; and,
Figs. 9A-9I are logic flow diagrams that illustrate the operation of the broadcast communications system, wherein Figs. 9A-9D depict various log on and authentication steps, Fig. 9E depicts a broadcast setup session, Fig. 9F depicts a method to initiate a two-way broadcast/interactive mode session, Fig. 9G depicts the operation of the system during the two-way broadcast/interactive session, Fig. 9H depicts the operation of the system during a broadcast-only session, and Fig. 9I depicts the steps performed to terminate a broadcast session.

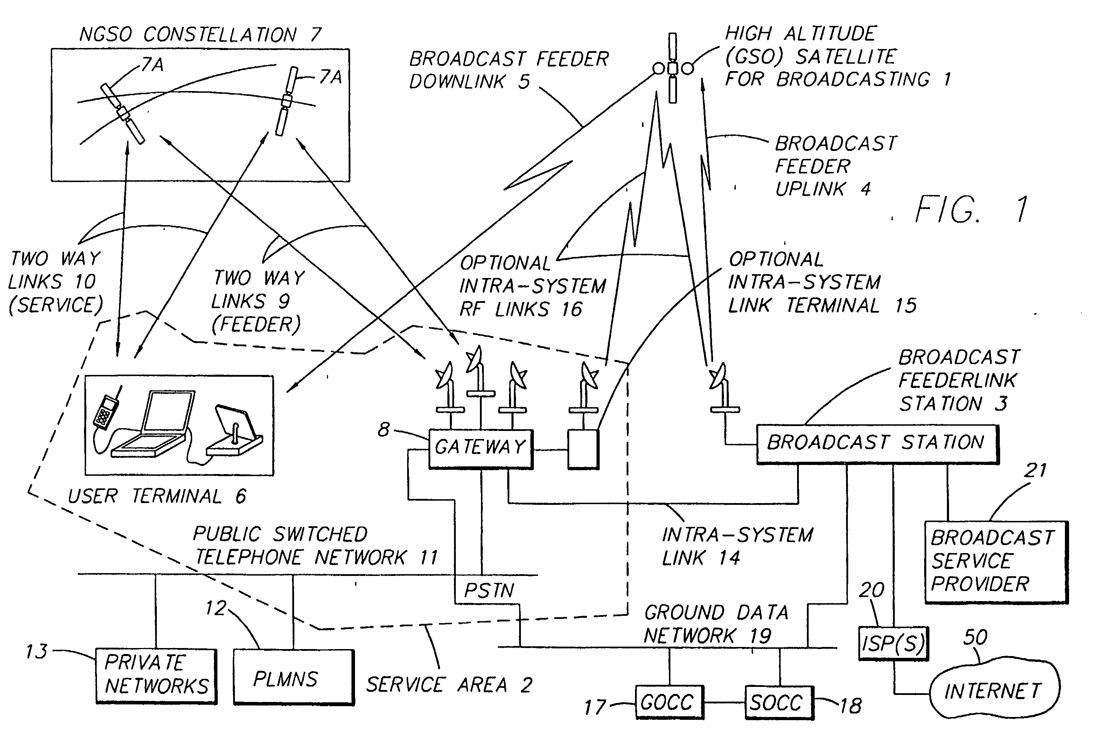

Fig. 1 is a block diagram illustrating a general architecture for a first embodiment of a satellite-based communication system in accordance with the teachings of this invention. Two satellite constellations are shown in the diagram, with one constellation being positioned higher in altitude than the other. For convenience, the higher altitude system will be referred to as a GSO constellation having one or more broadcast satellites 1. The second constellation will be referred to as a NGSO constellation 7 having NGSO satellites 7A. The broadcast constellation, higher than the NGSO constellation 7, can be Geosynchronous (GEO), Medium Earth Orbit (MEO), or in various High altitude circular or Elliptical Orbits (HEO), and may use orbits such as Loopus, ACE, or Molnya orbits, or any other suitable orbits. While the high altitude constellation will be referred to hereafter as a Geosynchronous system, it should thus be kept in mind that the teachings of this invention are not limited to the use of only a GSO broadcast satellite. The lower altitude constellation 7 may be in any set of orbit configurations, but generally will use inclined circular orbits or polar orbits. However, constellations of elliptical orbit satellites or combinations of elliptical and circular-orbits can be used as well. In general, the orbit of the low altitude constellation 7 does not need to be inclined but may instead be equatorial, polar, or any other configuration, including sun synchronous. Thus, while in the ensuing description the NGSO constellation 7 will be referred to as a Low Earth Orbit (LEO) constellation using an inclined circular orbit of less than 2000 km, the teachings of this invention are not limited to the use of only this particular type of NGSO constellation which may also use, by example, a Medium Earth Orbit (MEO).

Suitable, but not limiting, types of LEO satellite systems that can be used to implement the teachings of this invention is described in U.S. Patent No.: 5,619,525, "Closed Loop Power Control for Low Earth Orbit Satellite Communication System", by R.A. Wiedeman and M.J. Sites; U.S. Patent No.: 5,448,623, "Satellite Telecommunications System Using Network Coordinating Gateways Operative with a Terrestrial Communication System", by R.A. Wiedeman and P.A. Monte; and U.S. Patent No.: 5,303,286, "Wireless Telephone/Satellite Roaming System", by R.A. Wiedeman.

The at least one GSO broadcast satellite 1 is positioned at a location in an equatorial orbit and is able to illuminate, with RF energy, a desired service area 2. A Broadcast Feederlink Station (BFS) 3 is located so that it can complete a link to the GSO broadcast satellite 1. This link is referred to herein as a broadcast feeder uplink 4. The BFS 3 may or may not be located within the service area 2. A broadcast feeder downlink 5 connects the satellite 1 to a user terminal 6 within the service area 2. The NGSO satellite constellation 7 is at a lower orbit that the GSO satellite 1, and may be a LEO system as described above.

A point-to-point communications link station, also referred to as a gateway 8, is terrestrially located so it can both complete links to the NGSO satellite constellation 7 and to user terminals 6 located in the service area 2. The gateway 8 provides two-way feeder links 9 to the satellites 7A of the NGSO satellite constellation 7. At any given time there will typically be two or more NGSO satellites 7A in view of the gateway 8. Therefore there is at least one, but generally more than one, sets of communications antennas and equipment at the gateway 8. The NGSO satellite constellation 7 relays data on the feederlinks 9 to and from the user terminal 6 using two-way user service links 10. The two-way links can be through a single satellite 7A or, preferably, through two or more of the visible satellites 7A for enabling diversity combining of the signals in the user terminal 6 to avoid blocking, shadowing, and link fading. In like manner the GSO broadcast satellite constellation can include two or more satellites 1 for providing diversity. The gateway 8 can be connected to the Public Switched Telephone Network (PSTN) 11 and thence to other terrestrial cellular or public land mobile network systems (PLMNS) 12 or private networks 13. The gateway 8 is preferably also connected to the BFS 3 with a terrestrial intra-system data link 14. This link can be dedicated for this purpose or can use the facilities of the PSTN 11. In another configuration an intra-system link terminal 15 communicates with the BFS 3 over optional intra-system RF links 16. The links 16 are preferably made through the GSO satellite constellation, however, the NGSO constellation 7 can be used for this purpose, as could another satellite system which can be LEO, MEO or GEO.

Overall system control and resource allocation are managed by a ground operations control center (GOCC) 17 and a satellite operations control center (SOCC) 18. These centers can be centralized or distributed into several regional centers. The gateway 8 and the broadcast feederlink stations 3 are connected to the GOCC 17 with a ground data network (GDN) 19.

The BFS 3 is connected to one or more Internet Service Providers (ISPs) 20 or other broadcast service providers 21. The ISP 20 in turn connects to the worldwide web (WWW) of the Internet 50 and provides many services to the user, usually through the PSTN 11.

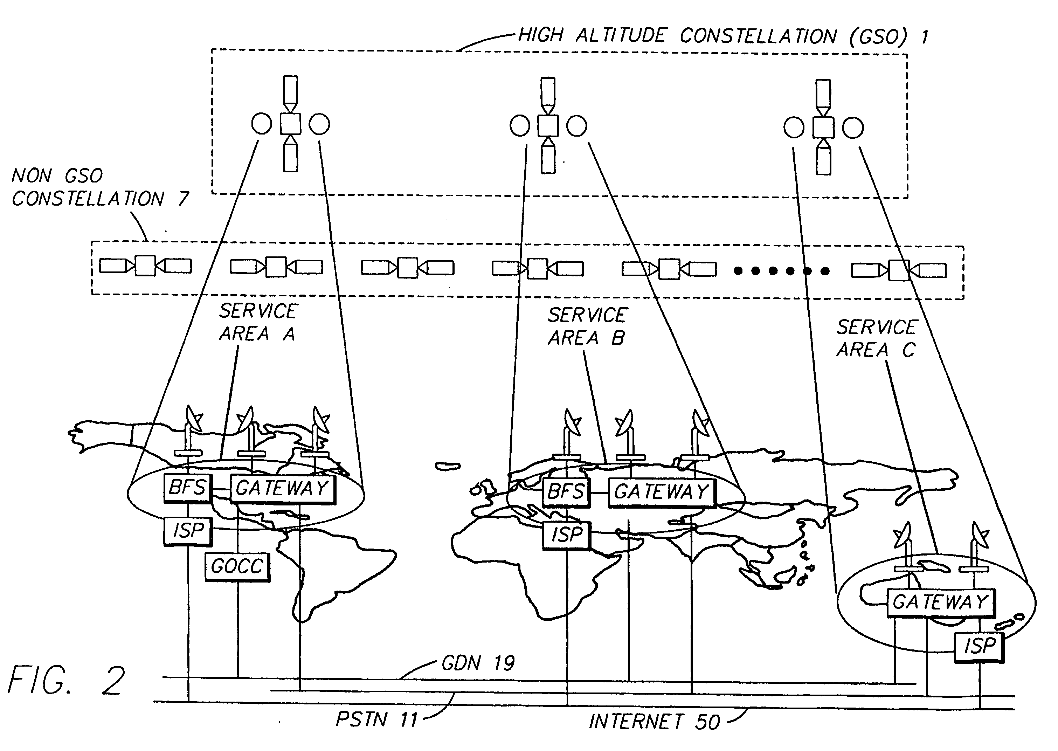

Many different service areas and sets of the foregoing equipment can be connected in a network. Fig. 2 shows an example of a worldwide network with the populated areas of the continents subdivided into, for example, three service areas A, B and C. Other implementations could subdivide the entire surface area of the Earth into service areas, including the oceans. Generally, the service areas conform to geo-political boundaries composed of countries or sub-regions within countries. Several countries can be served with one service area, or individual gateways 8 can share and serve multiple service areas. Not all service areas will necessarily have the broadcast equipment segment shown in Fig. 1 (e.g., the BFS 3).

In the example of Fig. 2 three sets of equipment are shown, but as explained before there may be many sets. Set A and Set B have all of the equipment (gateway 8, BFS 3, ISP 20), while Set C does not include the broadcast equipment (e.g., the BFS 3). As discussed before, these various equipments are inter-connected by the PSTN 11, GDN 19, and the Internet 50. A GOCC 17 is shown associated with the equipment Set A, but may be located anywhere in the network.

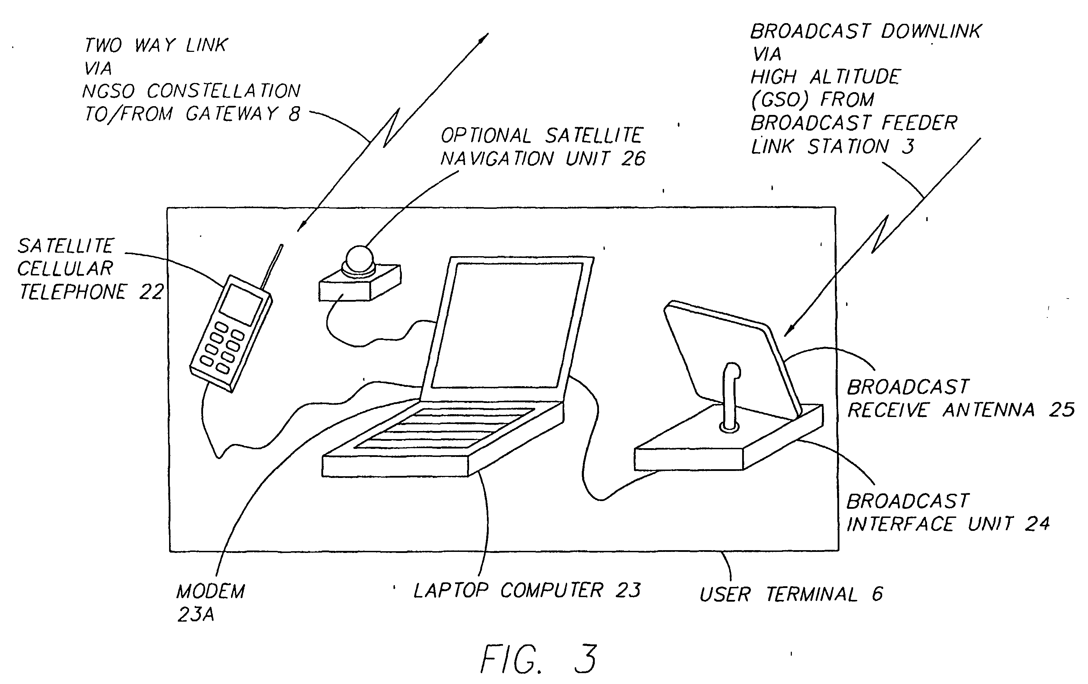

Many types of user terminals 6 are possible which can interwork with the system constructed around the principle of a combination of the cellular-like operation of two-way links combined with broadcast receive-only downlinks. Fig. 3 shows an example of one type of user terminal 6 useful for interconnecting with the Internet 50. In this example the user terminal 6 includes a satellite cellular telephone (SCT) 22 that is connected to a computer 23, such as a laptop computer, or that is connected directly to a Broadcast Interface Unit (BIU) 24. The SCT 22 includes a transceiver that is capable of transmitting RF signals to and receiving RF signals from the satellites 7A of the NGSO constellation 7. The BIU 24 provides a RF receiver for receiving the downlink transmissions 5 from the GSO satellite 1, and further provides a logical interface to the BFS 3. The BIU 24 is equipped with a broadcast receive antenna 25 which may be movable or steerable, using for example an optional satellite navigation unit 26, so as to aid in pointing the BIU antenna toward to the GSO satellite 1. The broadcast feeder downlink signal 5 is received from the BFS 3 via the GSO (or other altitude) satellite 1, while two-way links are established between the gateway 8 and the user terminal 6 via the NGSO constellation 7, using the SCT 22. The two-way links enable the user terminal 6 to acquire the hybrid system, and may also be used to receive data through the NGSO system when the data is not received from the GSO system. Also shown is a video receiver 6a, such as a television, to which desired programming can be directed from the BSP 21 via the BFS 3, broadcast satellite 1, and BIU 24, in accordance with an aspect of this invention.

Using data that is imbedded within the header information, or otherwise prepended or appended thereto, the BFS 3 determines whether to route response the data packages or files through the two-way links 9 and 10, via the lower speed and lower delay link through the NGSO (e.g., LEO) constellation 7, or instead over the broadcast satellite links 4 and 5 with their higher speed but longer delay. Generally, graphically intensive data, format data, and long file transfers are sent over the higher speed broadcast links 4 and 5, while responses, small files and short commands from the ISP 50, which are delay sensitive, are sent through the two-way links NGSO links 9 and 10. Since the location of the user terminal 6 is known, the BFS 3 is enabled to calculate the different link geometries and distances and determine the actual delays in message deliveries. If desired the BFS 3 can coordinate message delivery to the user computer 23 by internally buffering or otherwise delaying one or more responses so as to ensure that the data arrives at the computer 23 in an expected, logically correct time sequence.

A typical example of the operation of one type of user terminal 6 is now provided in the context of logging on to the system. The user, after unpacking the user terminal 6 and assembling same, notes his approximate location. This location can be obtained by the use of a navigation aid such as GPS or Loran, a map, by entering a zip code into a program in the computer 23, by dead reckoning, or any other means. In any case, using an approximate latitude and longitude and knowledge of or an estimate of which service area the user is located within, the user obtains an approximate azimuth and elevation angle to the GSO satellite 1 from the computer 23, or from a printed look up table in a user instruction manual, or by any other suitable means. The user then orients the broadcast receive antenna 25 to the signal from the GSO satellite 1 either manually or automatically by using built-in electronics and mechanical devices, such as a pointing device embodied in the satellite navigation unit 26. The satellite 1 can emit a signal to aid the user in this process. The overall procedure may use a technique similar to that used by consumers of DTH television to acquire the downlink from a DTH satellite. For example, an indicator light on the BIU 24 which flashes faster or brighter when the signal is acquired may be used.

It should be noted that the foregoing procedure may be avoided if the BIU antenna 25 is an omni-directional or a near omni-directional antenna. However, in this case additional RF power is required to be transmitted by the broadcast satellite 1.

In any case, once the broadcast signal is acquired, circuitry within the BIU 24 locks to the signal and determines the identification of the satellite 1 that the BIU 24 antenna 25 is pointed at or locked to. The satellite ID is passed to the computer 23 or otherwise displayed on the BIU 24, and indicates that the BIU 24 is active and ready. The user then, or in parallel, activates the SCT 22 for- requesting network access. The SCT 22 acquires the NGSO satellite constellation 7, forms a service request, acquires the potential gateway numbers and transits the service request. The NGSO system (gateway 8) then performs a position location of the user. Those gateways 8 that receive the user's access service request check the user location supplied either by the SCT 22 (which can use the optional satellite navigation unit 26) or by triangulation using well-known methods. In any case, if the SCT 22 is within a gateway's service area 2, that gateway begins the access authentication process while other gateways ignore the user.

It is noted that a network coordinating gateway of a type described in the above referenced U.S. Patent No.: 5,448,623 can also be used to assign the user terminal 6 to a certain terrestrial gateway 8 (or to itself if appropriate.)

In any event, in parallel the gateway 8 queries various data bases, using a SCT 22 identification (ID) number transmitted with the service request (or by other means), to determine if the user terminal 6 is within its home location or is roaming. The BIU identification number may be used as well. The gateway 8 then sends the user the serving gateway number, synchronization and timing information, if necessary, and other information required to acquire the NGSO system. Meanwhile one or more authentication processes are completed and the SCT 22 ID number, location, and the authorized services for the SCT 22 are entered into a home location register (HLR) or into a visitor location register (VLR) data base from data supplied from the GW HLR or the user's HLR. The gateway 8 then forms a ready for service message and transmits it to the SCT 22 via one or more satellites 7A of the NGSO constellation 7, which in turn can display the results on one or more of the SCT 22, the BIU 24, or the computer 23. The user may then request additional services, place telephone calls, send or receive facsimiles, and request or activate many other services including connection to the Internet 50 with slow speed two-way connections via a conventional dial up modem 23A in the computer 23.

In accordance with an aspect of this invention, and in order to provide a fast Internet connection at potentially lower cost to the user, and/or to obtain enhanced services, the user can request the enabling of the broadcast feeder downlink 5. In order to enable the broadcast feeder downlink 5 the user sends a broadcast enable message to the gateway 8 via the SCT 22 and the two way NGSO links 9 and 10. This message can be sent with a special signal from the keypad of - the SCT 22, or with a computer 23 software generated data message, or with a BIU 24 generated message. The gateway 8, after receiving the message requesting that the broadcast service be enabled, proceeds to process the request. This enabling procedure may be accomplished by detecting the service request within the gateway 8, or the user may dial a number at the BFS 3 and send the request directly to the BFS 3. Assuming the first case, and after verifying that the user has authorization to obtain a broadcast link, the gateway 8 sends a message over the intra-system data link 14 (or the RF intra-system data link 16) to the BFS 3. This message contains a user identification, which may include the SCT 22 ID, and/or other information as to the type of equipment available (i.e. modem speeds, type of BIU 24, etc.). The user's ISP 20 identification and available services may also be provided.

Considering now the setup operations at the BFS 3, the service request message from the user is received and various processes are performed. These processes may include further authorization and/or verification of user passwords (if required). Other processes include the verification of available resources on the satellite 1, as well as determining which satellite transponder or frequency or channel to tune to, as well as which portion of the bandwidth within the transponder, channel or set of frequencies within that transponder or channel or set of frequencies is to be used. At this stage the BFS 3 may also obtain ISP 20 authentication, if desired. The BFS 3, after reception of the user's identification and service request, can either verify the subscriber at its own database or user location register (ULR), which may be a visitor or home location register (VULR or HULR), to determine if the user is an authorized subscriber of that station. If the user is not, then the subscriber may be a subscriber of one of several ISP's connected to the BFS 3. If this is the case, a message may be formed and sent via a terrestrial line or a satellite link, or other means, to the subscriber's ISP 20. Further verification, notification of availability of service, or other functions can be performed and messages are then sent to the BFS 3 (if necessary), for assignment of services. Finally, various resource allocation and ready to broadcast enable messages are formed and returned to the gateway 8 over terrestrial or satellite intra-system links 14 and/or 16 for delivery to the user terminal 6.

The gateway 8 then sends the appropriate broadcast satellite 1 identification number and other synchronization information to the SCT 22 over the NGSO constellation 7 two-way links 9 and 10. This information is received by the SCT 22, and after demodulation and decoding, is sent to the computer 23 or to the BIU 24 which in turn determines if the serving satellite 1 is the same satellite as the one that was automatically or manually pre-acquired by the user with the BIU 24. If the satellite ID matches the one now held at the BIU 24 or the computer 23, the user terminal 6 signals the user audibly or visually (or both) that the broadcast system has been acquired and to stand by for further authorization. If not, the user is notified that the "wrong" satellite has been acquired, and the user then may either manually or automatically revise the pointing of the broadcast receive antenna 25 to acquire the correct GSO satellite 1. Alternatively a message can be sent by the SCT 22 to request the assignment of another GSO satellite 1. The computer 23 software can aid the user in the re-acquisition of the GSO satellite 1. The BIU 24 then signals re-acquisition and notifies the user that the system is ready. The BIU 24 or-the computer 23 forms a ready message and sends it to the SCT 22, which relays the ready message to the gateway 8 signifying that the user terminal 6 is ready and has acquired the pilot or guide signal from the correct BFS 3, via the GSO satellite 1.

The gateway 8 then proceeds with the two way service setup upon receiving the enable message from the BFS 3. The enable message can include the following information elements: an enable O.K. signal, and the GSO satellite resources to use for broadcast reception (e.g. transponder number, channel number, modulation type (if necessary) and any other link information required to interface the BIU 24 to the broadcast satellite 1. Upon reception by the gateway 8 of enable message(s), the gateway 8 proceeds with the call/Internet access setup, with the Internet connection using standard TCP/IP or other suitable protocols.

To begin a session the user performs an action either by a computer selection from a key board, a mouse click or other means, or by a command selection from the BIU 24. In any case a begin session service request is formed and is relayed to the SCT 22. The SCT 22 then relays the message to the gateway 8 over the two way NGSO satellite links 9, 10.

The gateway 8 next sends data to the BIU 24 including, for example, the broadcast satellite transponder and channel information in addition to any other link information required by the BIU 24 to access the broadcast feeder downlink 5, such as TDMA time slot designation, synchronization, and other information. This step may be accomplished after two-way links are established, or it can be accomplished prior to two-way link setup using paging and access channels between the gateway 8 and the user terminal 6, via the NGSO constellation 7. The gateway 8 then sends two-way link set up information to the SCT 22 using standard procedures for the NGSO system. This may include FDMA channel assignment(s), TDMA slot number(s), CDMA spreading code(s), satellite IDs, beam numbers etc., and any other information necessary to set up the two-way links via the NGSO constellation 7.

Upon reception of the two-way signal/link assignments and the broadcast link assignment data, the SCT 22 performs two tasks in parallel or in series. First, it shifts its frequencies of operation to the assigned frequency set for two-way communications, then synchronizes to and/or otherwise acquires the service downlink signal 10, and reports success to the gateway 8 over the two-way link. Second, the SCT 22 sends the broadcast link information to the BIU 24 either through the computer 23 or through a direct connection (not shown in Fig. 3). The BIU 24 uses the provided information to acquire the desired broadcast feeder downlink signal 5. The BIU 24 then signals the computer 23 that the BIU 24 has acquired and is ready to establish connectivity. The computer 23, or the BIU 24, then formats a message to the SCT 22 which in turn relays the ready to receive signal to the gateway 8 via NGSO constellation 7. All units then go to standby, waiting for a begin session command.

Upon receiving the begin session command the gateway 8 formats a message to the BFS 3 indicating that the user terminal 6 is ready to proceed. The modem 23A of the computer 23 is then linked to the ISP 20 for two-way transmission at the proper data rate for the modem. This process may take several exchanges of messages using the SCT 22, the satellites 7A, gateway 8, the intra-system link 14, and the ID of the BFS 3 coupled to the ISP 20 or other providers of other information. The data rate for the modem 23A, limited by the two-way link data rate, is then established and the user terminal 6 is ready to begin. An optional acknowledgment signal to the gateway 8 can indicate to all units to begin the session by signaling via the two-way links 10. After reception of the begin session command by the SCT 22, and its relay of the command to the computer 23, the user terminal 6 notifies the user either audibly or visually, or both, that he may begin the session. All units then go to begin session standby.

By using software in the computer 23 to access the ISP 20 in a normal manner the user begins an Internet session, if the user has not already been authorized at the ISP 20, by entering with a keyboard or an external input device (e.g. mouse) a set of commands which may include a user name and a password. This information is digitized and sent from the computer 23 to the two-way link 10 via the NGSO SCT 22, the satellite(s) 7A, and thence to the gateway 8. Upon receipt by the gateway 8, and after an optional position location operation to determine if the user terminal 6 is still within the service area 2, the gateway 8 relays the user's information via the intra-system link 14 or the intra-system RF links 16 to the BFS 3 and thence to the ISP 20. The ISP 20 authenticates the user, if it hasn't already done so, and sets up the session by sending the opening screen data to the BFS 3.

The user interactive session then begins. Either the user can initiate commands and/or send data, or the ISP 20, from internal or external command generation, can initiate commands and/or send data. If the user initiates a command and/or sends data, it is routed through the NGSO constellation 7 to the gateway 8 and thence to the BFS 3 and thence to the ISP 20. If the ISP 20 initiates the command and/or sends data to the user it is routed to the BFS 3, and thence to a Response Manager (RM) 3A to make the routing of the message or file decision. The RM 3A then decides if the response is urgent. If yes the response is routed to the gateway 8 for transmission to the user over the NGSO network 7. If the response is not urgent it is routed over the broadcast link 4,5 to the user 6.

Various user initiated commands and/or data routing are now discussed. The user initiated commands are issued from the BIU 24 or the computer 23 or from some other device connected to the BIU 24. These commands and/or data are formed into a message, packetized and prepared for transmission. The packets are integrated into a data stream and routed to the SCT 22 for transmission. The SCT 22 relays the message to the gateway 8 via the NGSO satellite constellation 7. The gateway 8 then relays the information to the BFS 3 which in turn relays it to the ISP 20. Generally, a response is formed, either by an external network connection (such as a web site) or other means, or by an internal means within the ISP 20 network. In any case the response is sent to the BFS 3 by either the external or internal network. The response is received at the BFS 3 and routed to the RM 3A within the BFS 3. The Response Manager 3A, using various algorithms, makes a decision according to threshold values as to the routing of the response. Generally, urgent responses are routed to the user via the NGSO constellation 7, and non-urgent responses via the broadcast link 4,5.

The response data and/or files that are marked as being urgent are marked for delivery and immediately sent to the gateway 8 response processor. The gateway 8 receives the response and relays the command and/or data to the SCT 22 via the NGSO constellation 7. The SCT 22 receives the response over the two way link and delivers it to the BIU 24 and/or the computer 23 for further action. The BIU 24 or the computer 23 checks for a command to stop the session and, if present, the user, the BIU 24 or the computer 23 initiates a stop session command. If a stop session command is not present the system stands by for further commands and/or data.

For the case of non-urgent commands the response data and/or files that are not marked as being urgent are routed to a non-urgent response processor where the nature of the data is investigated and various parameters of the incoming data are checked to determine if a threshold is exceeded. A decision is then made as to the routing of the response. Small files or data deemed desirable for transmission over the NGSO system 7 are marked for transmission by the NGSO two way links 9, 10. The data is then routed to the gateway 8 response processor where the process proceeds as described before. Larger files or data deemed desirable for transmission over the broadcast system are marked for transmission by the one way broadcast links 4, 5. The data is sent to the BFS uplink processor, is integrated into the uplink data stream, and is then transmitted to the BIU 24 via the broadcast satellite 1. The signal is received by the receiver of the BIU 24 where it is delivered to the using equipment for action. The BIU 24 or the computer 23 checks for the command to stop the session as described above for the urgent command or data case.

The following is an example of the operation of an interactive session with an ISP 20. Assuming that this interactive session is with an ISP 20 and the opening screen is selected, the ISP 20 either triggers a stored screen in the computer 23 or sends a screen via the broadcast links 4 and 5. The user then inputs a target Internet access address and selects enter or otherwise indicates to the software in the computer 23 that he wishes to receive a selected WWW page or other data. This request is sent to the gateway 8 via the SCT 22 using the two-way links 9 and 10. The gateway 8 relays the request to the BFS 3 via the intra-system data link 14 or other means, which could include the PSTN 11. The BFS 3 in turn relays the request to the ISP 20. The ISP 20 in normal manner formats the data request and delivers it to the Internet 50 which routes the request to the selected Internet 50 data server having the address indicated by the user. The selected Internet server then sends the appropriate file via the Internet 50 to the ISP 20 which may in turn add, if not already present, broadcast vs. two-way link selection information according to the nature of the file (e.g. length, numbers of files, types of files, etc.) or other information that allows the BFS 3 to determine a preferred routing for the returned data, i.e., routing over either the broadcast GSO links 4 and 5 or over the two-way NGSO links 9 and 10.

Assuming that the user has requested a large file or set of graphics to be delivered to the computer 23, the queried target server of the Internet 50 sends the data to the ISP 20 where it is processed and forwarded to the BFS 3. The BFS 3 may strip off the broadcast vs. two-way link selection information and associates the user requested data with the assigned resource, with the appropriate satellite 1 transponder and channel, and optionally with other information such as a receive time slot, a CDMA code, or any other information necessary to allow the BIU 24 to identify its signal from among the many being transmitted. The data is then encoded, modulated, up-converted and transmitted to the GSO satellite 1 on the broadcast feeder uplink 4. This transmission can be at a very high data rate, such as 400 MBPS. The GSO satellite 1 repeats this signal after frequency translation and transmits the signal back to the Earth. The BIU 24 receives the signal using the antenna 25, recognizes its assignment address, or code, or other means of identification, and is then able to retrieve the desired high speed data packets from the incoming data stream. After decoding and buffering, the BIU 24 sends the desired file(s) to the computer 23 which, using its software, displays and/or stores the requested information in a conventional fashion.

The BFS 3 can be programmed so as to base its selection of GSO or NGSO links on, by example, a fixed file size and/or a fixed file type. For example, all files greater than a predetermined number of bytes, or all files containing graphics, are always sent over the higher speed GSO links 4 and 5. Alternatively, the BFS 3 link selection criteria can be made adaptive. For example, during periods of actual high user demand, or predicted high user demand, for the NGSO constellation 7 (it being remembered that many SCTs 22 will be present in the service area 2 and requiring voice-only service) the BFS 3 may vary the file size criterion downwards so as to send more data over the GSO links 4 and 5. Conversely, during periods of lower NGSO system demand the BFS 3 may vary the file size criterion upwards so as to send more data over the NGSO links 9 and 10. The BFS 3 link selection function may also consider other factors, such as link quality as derived from externally provided information (e.g., real-time or near real-time link impairment information resulting from weather conditions in the service area 2) or from internally-derived information such as requests for retransmission received from the user terminal 6. For example, if data being sent over the NGSO links 9 and 10 results in numerous requests from the user terminal 6 for retransmission due to uncorrectable errors, the BFS 3 can be informed by the gateway 8 of this condition and, in response, can begin utilizing the GSO links 4 and 5. Furthermore, data identified by embedded information or directly by the user as being especially critical may be sent over both the GSO and the NGSO links to insure correct reception at the user terminal 6. Any required data ACKS/NACKS and/or handshaking in general are sent over the two-way NGSO links 9 and 10.

The two-way NGSO link data is handled in a slightly different manner than the one-way GSO data link described above. The data from the queried Internet server is addressed and sent via the Internet 50 to the ISP 20, where two-way delivery is appended to the data addressing. Alternately the BFS 3 can provide selection of two-way delivery. This data is in turn processed to the BFS 3 via the link between the ISP 20 and the BFS 3 at the data rate of the computer 23 modem 23A. Alternatively the data rate between the ISP 20 and the BFS 3 can be higher, and the BFS 3 then buffers the data locally and converts to the proper data rate for the computer 23 modem. The BFS 3 then routes the data to the gateway 8 via the intra-system link 14 (or the intra-system RF links 16) where it is received and re-packetized, if necessary, into the format specified for the over-the-air NGSO protocols. The gateway 8 then buffers the data stream and begins the transmission by encoding, modulating, up-converting, amplifying and otherwise processing the signal to the user over the selected one of many uplink channels or circuits. The uplink channel is received by the NGSO satellite 7A, translated in frequency, amplified, and sent to the SCT 22. The SCT 22, after receiving, amplifying, down-converting, demodulating, and decoding the signal passes the data to the modem 23A of the computer 23. The modem 23A extracts the file data, processes it, and delivers it to the computer 23 for display, storage, or other use.

This process continues until the user selects to end the session. The user enters an "end session" command through the computer 23 keyboard (or other external device, such as a mouse), or indicates the end session command by the use of the keypad of the SCT 22. In either case the end session command signal is transmitted to the gateway 8 over the NGSO two-way links 9 and 10. The gateway 8 signals the end session command to the BFS 3 which in turn signals the ISP 20 to end the session. End of session signaling from the ISP 20 is then communicated to the BFS 3 and to the gateway 8, which tears down the established links and returns the freed resources to a pool for further usage. The BIU 24 goes to standby, and the SCT 22 returns to the access and paging channels awaiting another event.

An example of a call to the user terminal 6 unit will now be described in the context of an Internet call to the user terminal 6 from a device connected to the Internet 50.

First considering a broadcast only mode, and further considering a variation of the method described above, the two-way interactive Internet 50 connection may result in a broadcast only mode, using the two-way NGSO links to set up the broadcast. In this case an initiate broadcast signal is generated by the user, the BIU 24 forms an initiate message and after packetizing the message passes it to the SCT 22 where it is incorporated into the data stream and relayed via the NGSO satellite constellation 7 to the gateway 8. The gateway 8 relays the initiate signal to the BFS 3 which in turn relays the signal to the BSP 21. The BSP 21, after processing the request, generates an internal (or external) response which is forwarded to the BFS 3. The BFS 3 sends the response to the Response Manager 3A. If the signal from the Response Manager 3A is not received or if it is corrupted, the system performs a retry for n retrys. If successful, the signals are relayed as before, if not a terminate signal is formed and relayed to the gateway 8, where the gateway 8 executes a stop session. If successful, the BFS 3 notes the broadcast only mode and, if authorized, sends the start message to the BFS uplink processor. This processor then causes the input from then on to come directly to itself, instead of through the RM 3A. In any case the broadcast signals are prepared for uplinking and sent to the satellite 1. The satellite 1 relays the signals to the BIU 24 where the results are used. In general this means the results are displayed, although many uses of the downlinked signal may be found. If the broadcast session has started, a billing function is initiated and a signal to the gateway 8 is processed indicating that the broadcast is started. The gateway 8 sends via the two-way link a terminate signal, removes the two way link, and otherwise puts the two-way system into standby, thereby using no NGSO 7 system resources. At this time the user may utilize the two-way NGSO function for a telephony call or any other purpose.

Considering now a terminate session method, the terminate session signal can come from the user, from the BIU 24, or from the BSP 21. In any case, a terminate command is formed at the BIU 24 and is relayed to the SCT 22 where it is transmitted via the NGSO satellite constellation 7 to the gateway 8. The gateway 8 receives the request and relays the terminate request to the BFS 3. The gateway 8 removes the SCT resources and commands the SCT 22 to standby, and also stops the two-way billing. The BFS 3 sends the terminate message to the ISP 20 or BSP 21, as appropriate, which deletes the user request for service from the active list and stops billing. The BFS 3 then terminates broadcasting to the user and stops billing. There may be many variations of this process.

A consideration is made of the following example transmission. Assume that the user terminal 6 has obtained access to the network and to the ISP 20 according to the process described earlier (other means may be used as well). All units are at standby. The user terminal 6 can be manually operated or can be positioned remotely and be unattended. The computer 23 or other suitable computer can be connected to an external device such as a device which requires substantial data from time to time. Assume, for example, that the user terminal 6 has set up an access web page at the subscriber's ISP server 20. As an example, a computer user with a conventional dial up modem and a PSTN connection to an ISP desires to download information to the user terminal 6 connected to the network as described previously. Further assume that the subscriber has set up an access web page at the subscriber's ISP server. The session begins as follows. The calling party enters the Internet address of the subscriber, i.e., a subscriber associated with the user terminal 6. The calling party's computer and modem sends the web page request to the calling party's ISP. This ISP in turn processes a message with the request via the Internet 50 to the subscriber's ISP 20 where the data is temporarily stored in a directory or folder on the subscriber's server that is set aside for the subscriber. The ISP 20 then checks to see if the subscriber is connected and ready to receive a query and information. If so, the ISP 20 processes a service request to the BFS 3. If not, the ISP 20 indicates unavailability and can instead allow a data download to the server for later delivery. Assuming for this example that the user terminal 6 of the subscriber is connected to the network and is in standby, the ISP 20 forms a page message with a data connection alert. This message is sent, along with the subscriber ID to the BFS 3, which begins, in parallel, a session set up procedure. These procedures may be applied to all modes of operation. Firstly, it checks for system resource availability and may at this time append the channel, transponder number (and modulation type if necessary) to the gateway 8. Secondly, the BFS 3 forms a service request and sends it (with the appended data if necessary) to the gateway 8 over the intra-system link 14. The gateway 8 receives the service request, and appended data (if sent), buffers the information and forms a page message. The page message includes as a minimum the user terminal 6 identification (which may be of many forms). After encoding, modulating, and up-converting the page message the gateway 8 transmits same via the NGSO satellite constellation 7 toward the user terminal 6 (using the last logged user position, or the user terminal 6 position at the time of the last call, as an aid). The signal is received at the satellite 7A, amplified, translated in frequency, further amplified and transmitted toward the user terminal 6. The SCT 22 receives the page message and responds with an acknowledgement back to the gateway 8. The gateway 8 then sets up a two-way link through the satellite 7A, as described before. Setting up the two-way link includes performing a position location 5 for the call and verifying that the user terminal 6 is still located in the service area 2. Acquisition of the selected channel and spreading codes or time slots or other over-the-air protocols are then accomplished by the user terminal 6, after which the user terminal 6 signals the BFS 3 that the user terminal 6 is ready to proceed. At this time, or prior if parallel broadcast set up is enabled, the BFS 3 sets up a broadcast link as described before using the two-way link to communicate the selected BIU 24 parameters to the user terminal 6. When all units indicate acquisition and signal standby the subscriber's ISP 20 signals the calling party's ISP that the subscriber is on line and ready for an interactive session. The calling party is thus notified that the session may be initiated and the session then begins.

Assuming that text and commands are sent that are desired to be handled with low latency (delay), the text or data can be sent with an urgent tag, or alternatively selection can be made at the BFS 3, via the Internet 50 to the subscriber's ISP 20. The subscriber's ISP 20 appends a routing message to the data and forward it to the BFS 3. The ISP 20 detects the urgent tag, or alternatively selection can be made at the BFS 3, and directs it to be sent to the gateway 8 over the intra-system data link 14. The gateway 8 in turn sends the data as described before to the SCT 22 over the two-way links 9 and 10. The downconverted, demodulated and decoded signal is then passed to the computer 23 via the computer's modem for display, storage or other use. Large files or data streams are instead detected and routed by the ISP 20 or the BFS 3 to the broadcast links 4 and 5. When this occurs the BFS 3 packages the data into the BIU 24 compatible format, addresses it, encodes it, and modulates the data which is then multiplexed using the known users TDMA slot or spreading code or some other means of associating the data with the specific user terminal 6 that the data is directed towards. The data is then transmitted to the broadcast satellite 1 using the selected transponder and channel towards the user terminal on the broadcast feeder uplink 4. The GSO satellite 1 receives the signal, amplifies it, translates it in frequency, further amplifies it and transmits it on the proper beam in the direction of the user terminal 6, as previously described. The BIU antenna 25 receives the signal and routes it to the BIU 24 which, in response to its address and other identifying characteristic strips, out the desired data from the high-speed downlink. After downconversion, demodulation and decoding, and other signal processing, if necessary, the data is routed to the computer 23 for display, storage, or other use.

In the above example the computer 23 (or other computing device) may function as a remote server which could be queried by other computer users anywhere in the world. The user terminal 6 in this mode is in effect a dial-up server which uses system resources only when queried, and is thus a low cost means of data acquisition.

It should be apparent from the foregoing log-on description and examples that the user terminal 6 can operate in a mobile environment. Thus, while the examples have described a transportable set of equipment, an automated vehicle-mounted equipment set is also within the scope of the teachings of this invention.

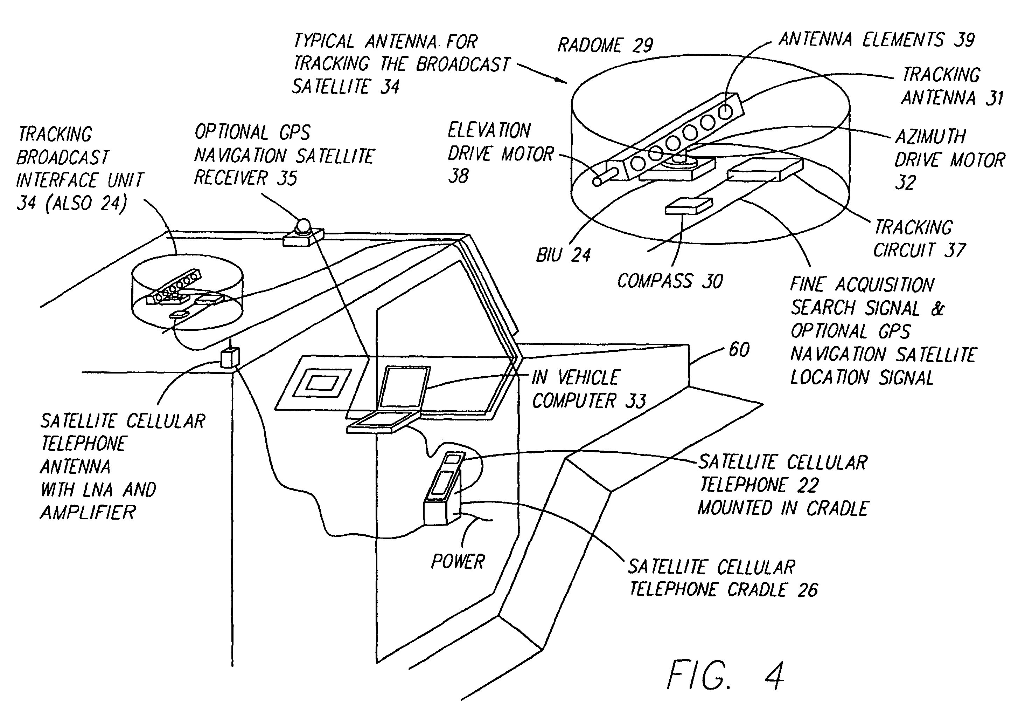

For example, Fig. 4 depicts an installation within a vehicle 60. In this embodiment the SCT 22 is mounted into a cradle 26. The SCT 22 is removable and may be used for voice and low speed data over the NGSO constellation 7 independent of the broadcast data link. The cradle 26 provides power and battery charging. Connected to the SCT 22 is an in-vehicle computer 33 (which may be a laptop computer) or some other computing device in the vehicle. The in-vehicle computer 33 is connected to the BIU 24 which is equipped with a broadcast satellite tracking antenna 34, which performs the same function as the previously described broadcast antenna 25. The tracking antenna 34 can be an electronically steered system or, as shown, a mechanically steered system. In any case, the antenna beam is directed toward the broadcast satellite 1 by a tracking mechanism. The antenna 34, contained in a radome assembly 29, is comprised of a tracking antenna 31 which may be comprised of several elements 39 to obtain high gain and efficiency. The antenna 34 is oriented toward the satellite 1 with an azimuth drive motor 32 and an elevation drive motor 38 which respond to signals generated by satellite tracking circuit 37. The tracking circuit 37 derives motor drive signals from input data from a compass 30 and/or from some other vehicle pointing means, or from an alternative source such as a signal provided by a GPS system 36 or some other means of determining latitude and longitude.

The use of the system of Fig. 4 is similar to the described previously, but is modified to account for acquiring the broadcast satellite 1. The computer 33, using latitude and longitude position data and a satellite position look-up table, provides rough pointing instructions to the tracking circuit 37. Fine acquisition search signals are generated by the computer 33 with the aid of the broadcast signal being received by the BIU 24 (also referred to as a tracking broadcast interface unit). A search algorithm either in the vehicle computer 33 or in the tracking circuit 37 performs a search to lock on to the GSO satellite 1. The remainder of the process remains as previously described.

Based on the foregoing description it can be appreciated that description that users can roam from gateway to gateway and obtain Internet connectivity and other services as authorized by various sets of a gateway 8, BFS 3 and the ISP 20 which is connected to the BFS 3. Using the SCT 22 in different service areas the user can obtain network access where roaming agreements and BFS 3 equipment exist. To roam, the user first sets up a local service area gateway access by sending a service request to the service area gateway 8. The gateway 8, after checking the user terminal 6 identification, determines that the user is roaming and from his identification processes a message over the signaling system of the PSTN 11 (such as SS7 signalling) to the home gateway of the user. The roamed-to gateway obtains authorization information from the user terminal's home location register (HLR). Once satellite cellular operation is obtained the user may place voice and data calls via the two way links 9 and 10 according to normal procedures for the NGSO constellation system. If the user desires to enable the broadcast links 4 and 5 he sends a service request as previously described. The serving gateway 8 sends the service request to its connected BFS 3. This station may have its own user location register, which may be of two types, a home user location register (HULR) for those subscribers to this broadcast service within the local gateway service area, and a visitor user location register (VULR) for those users which roam to the service area. The authorization operation is similar to that of the satellite cellular telephone system. If a roaming agreement exists between the home BFS 3 and the roamed to BFS a connection is established. Likewise, each BFS 3 may have one or more ISPs 20 connected, and further signaling is used to establish roaming access to at least one of the ISPs 20, assuming that roaming agreements exist between the user's home ISP 20 and one or more of the local roamed-to ISPs connected to the BFS 3.

As is shown in Fig. 2, a user terminal 6 can thus roam from service area A to service area B and obtain connectivity and various services including satellite cellular telephone and Internet access. Roaming to service area C would provide voice and data and low speed Internet access, but would not provide the higher speed broadcast data link since service area C does not include a BFS 3.

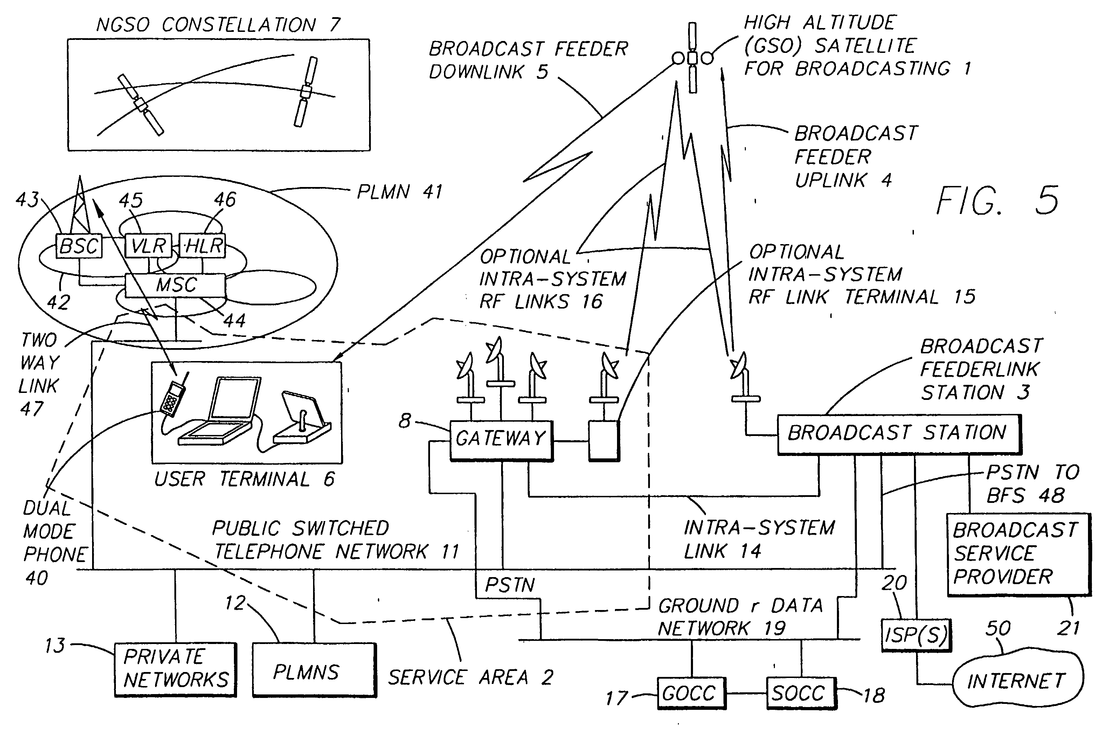

The SCT can be a dual mode SCT (DMSCT) 40 as shown in Fig. 5. In the telephone mode the DMSCT 40 can switch between the satellite mode, as described before, and a terrestrial mode for use within a public land mobile network (PLMN) system 41. The PLMN 41 may or may not be within the satellite service area 2. The PLMN 41 typically comprises various cell site areas 42 which are controlled by base station controllers (BSCs) 43 connected to a mobile switching center (MSC) 44 which contains a VLR 45 and a HLR 46. The MSC 44 also includes circuitry/software and other means of logging in users, authenticating users, and enabling access to the network. The MSC 44 is connected to the PSTN 11 which includes an inter-network switching facility such as signaling system seven (SS7). This signaling system is used to route calls, and provides a means of querying databases of HLR and VLR associated with various mobile networks to allow roaming and authentication. To enable the operation of the broadcast link, a connection to the PSTN 11 is made from the BFS 3 to the PSTN 11, and the BFS 3 includes a plurality of dial-up modems for connections between the BFS 3 and the PLMN 41.

The operation of the broadcast mode when using the terrestrial cellular network is as follows. Assume that the user terminal 6 is situated in an area with cellular coverage and is located within a cell site area served by BSC 43. The user turns on the DMSCT 40 and either manually or automatically select the terrestrial PLMN 41. The user terminal 6 establishes a two-way cellular link 47 between the DMSCT 40 and the BSC 43, and thence to the MSC 44. The user terminal 6 is logged onto the network using the HLR 46 or, after a query of a remote HLR, using the VLR 45. After authentication and other processes the user is able to make a telephone call and otherwise utilize the PSTN 11.

Assume further that the user desires access to the broadcast data link 5. To do so the user dials a telephone number, or software in computer 23 dials a telephone number that is associated with the BFS 3. This process is similar to that of a dial-up modem connection provided for commercial Internet service providers today. If the user is roaming and knows his location he can look up the appropriate number in a book or manual. Alternatively he can enter the zip code or local city and town identification and have the computer 23 perform a lookup, or the user can dial an 800 number and select from a provided list, or can obtain the number by any other suitable means. The user enables the modem of the computer 23 to dial the number of the BFS 3, which is closest to the user or otherwise selected. The BFS- 3 responds and a connection is made using the two-way cellular link 47 to a BSC 43 serving the cell site area 42. The BSC 43 connects the user terminal 6, via the MSC 44 through the PSTN 11 and the PSTN/BFS connection 48, to the BFS 3. The BFS 3 processes the signal similar to that discussed previously and calls can proceed as discussed before with the two-way wireless link being provided by the cellular system two-way link 47.

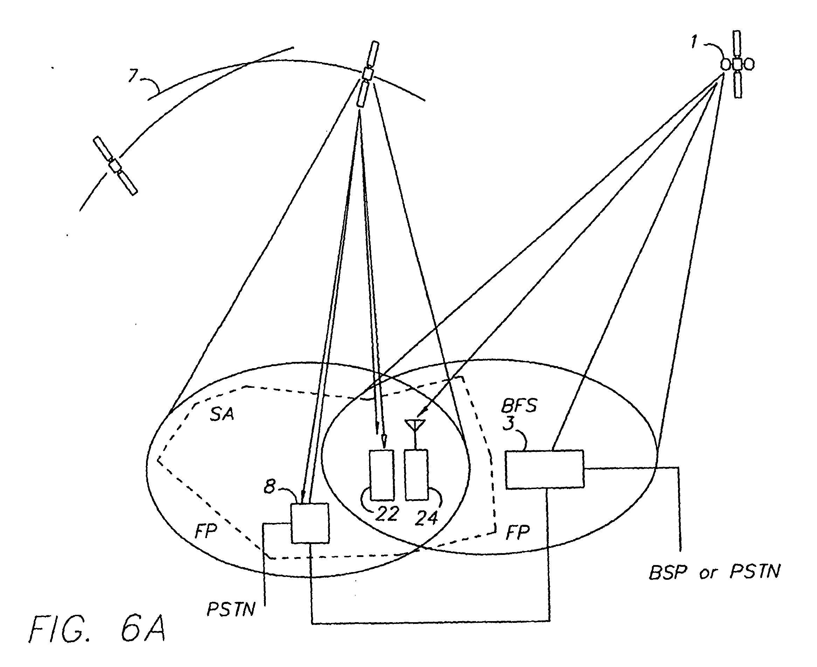

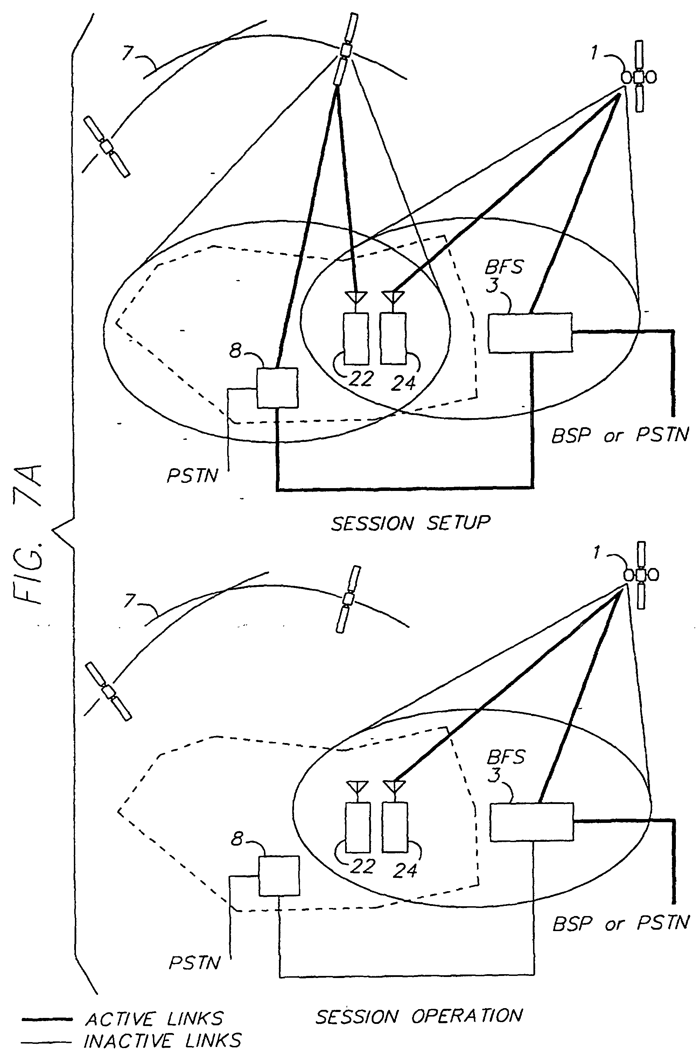

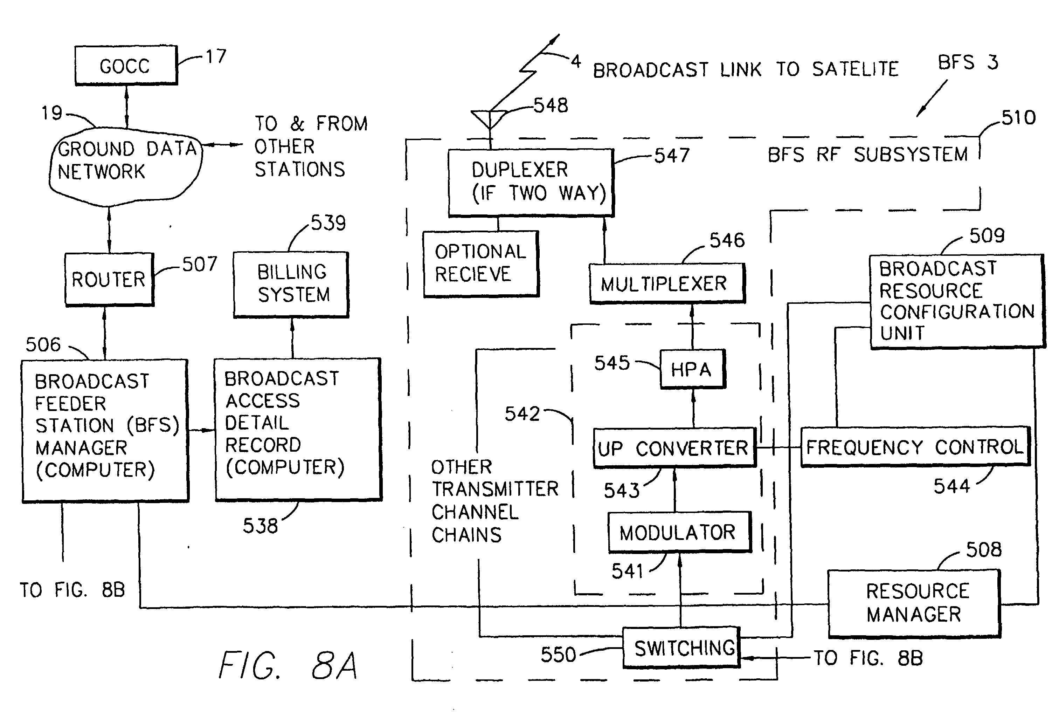

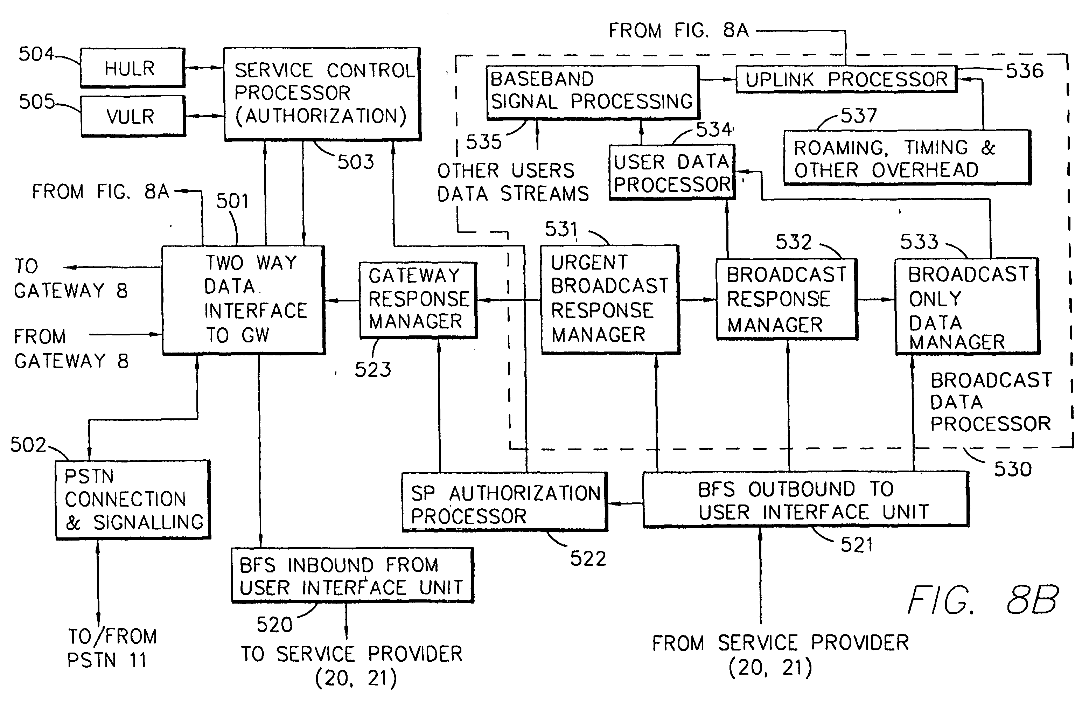

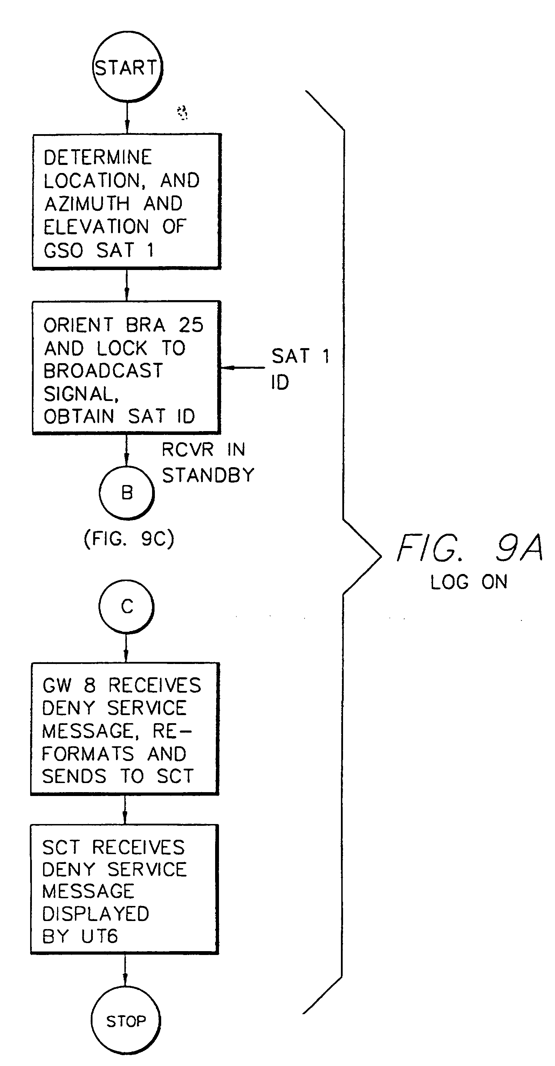

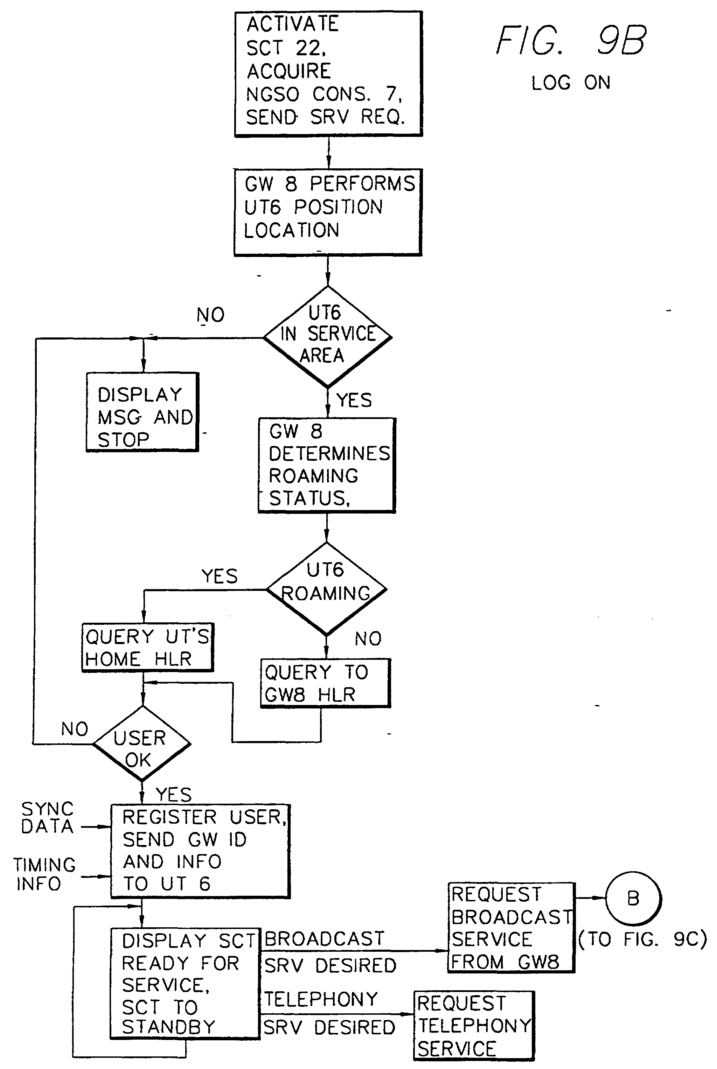

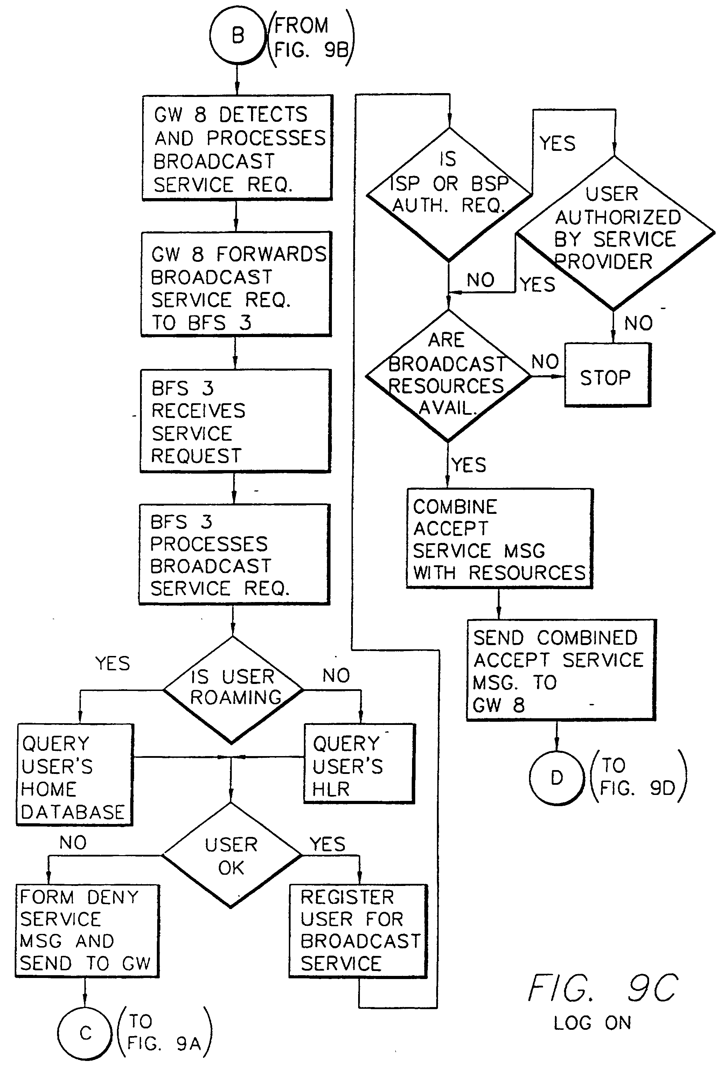

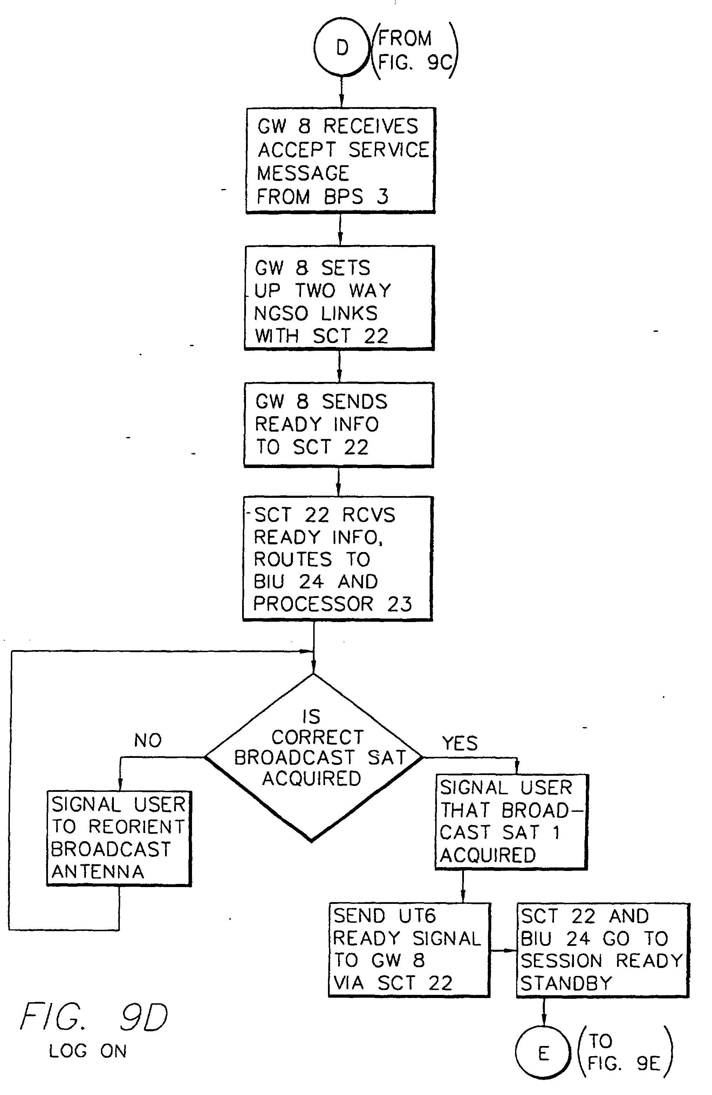

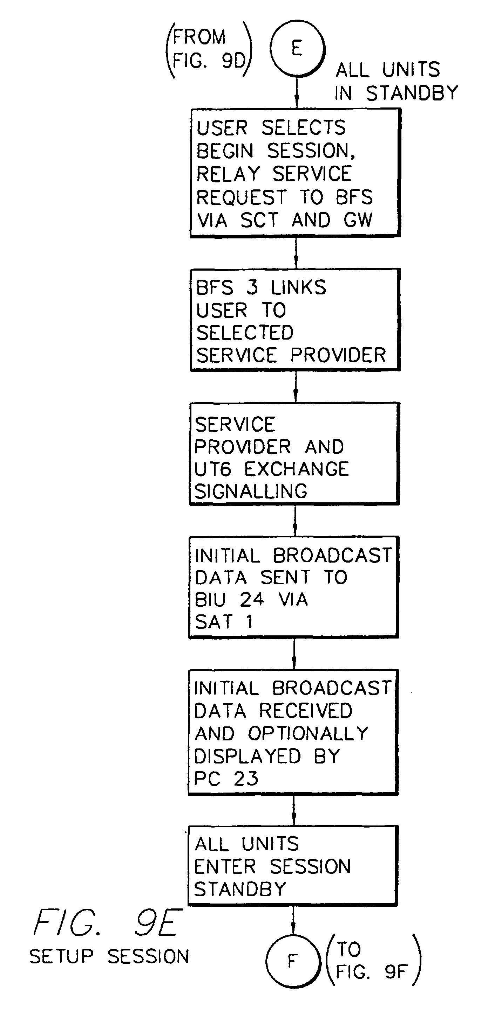

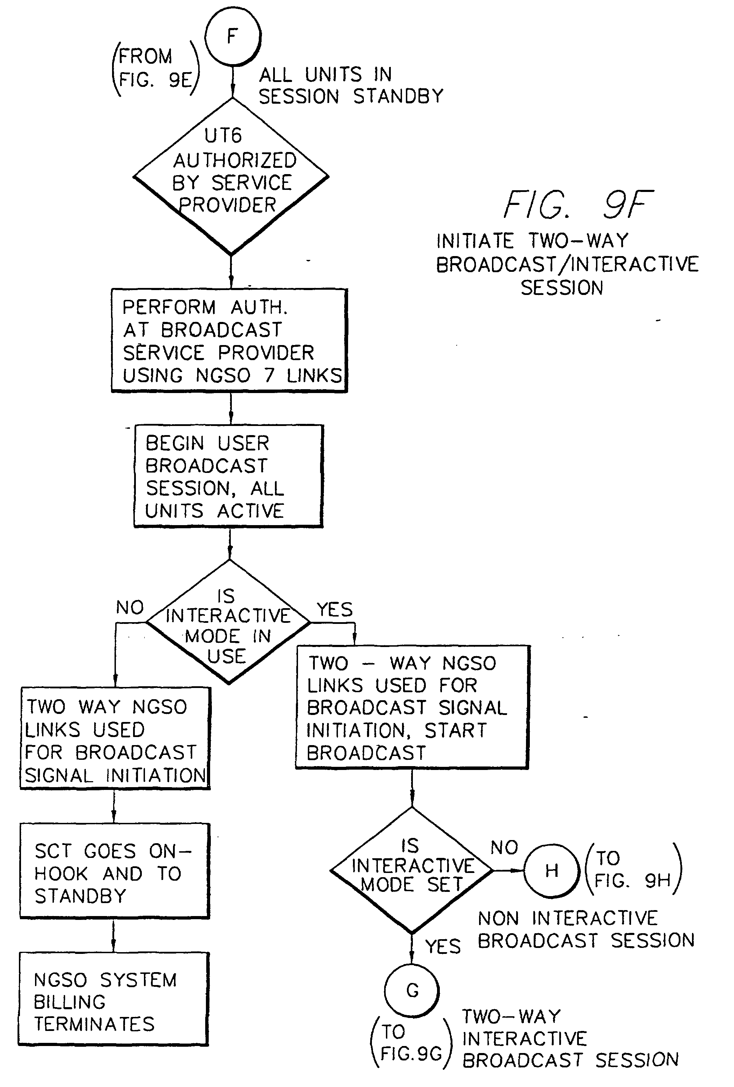

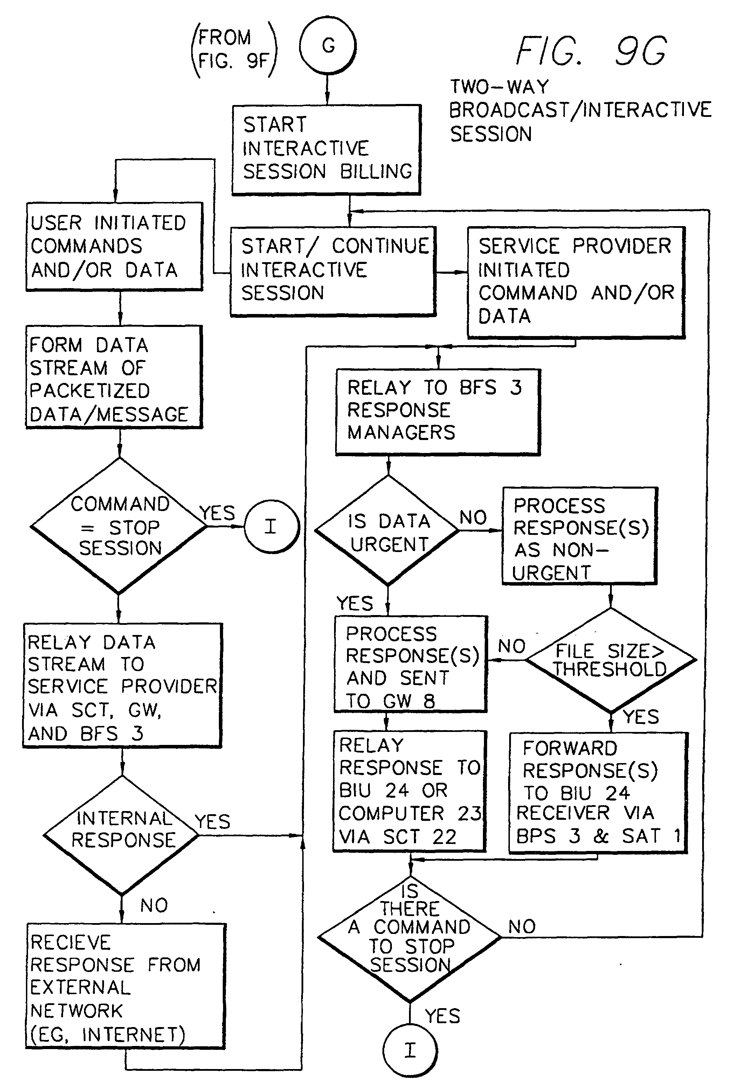

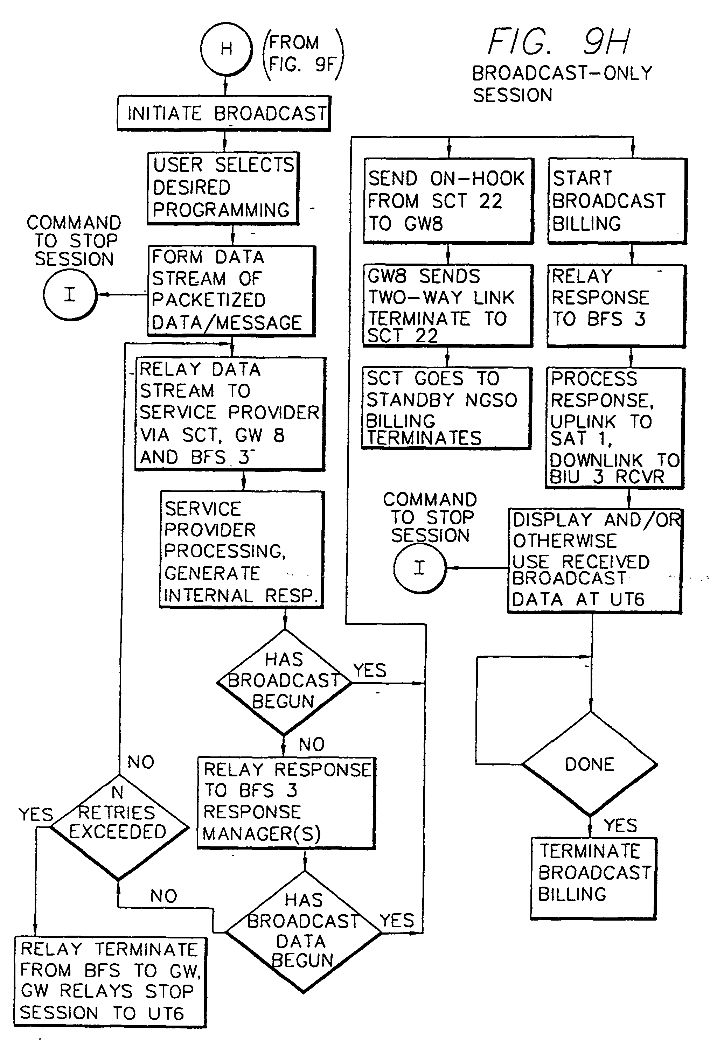

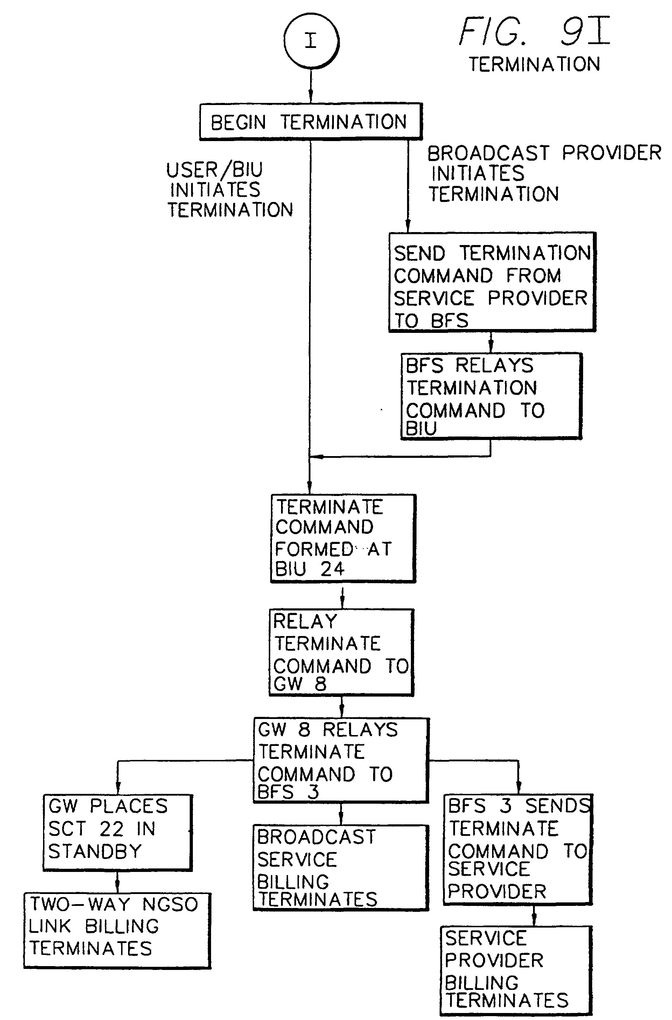

Having thus described the overall architecture and operation of the broadcast/point-to-point satellite-based communications system of this invention, a more detailed description will now be made of the architecture and operation with reference to Figs. 6A-6F, 7A-7H, the BFS 3 block diagram of Fig. 8, and the logical flow diagrams of Figs. 9A-9I, wherein Figs. 9A-9D depict various log on and authentication steps, Fig. 9E depicts a broadcast setup session, Fig. 9F depicts a method to initiate a two-way broadcast/interactive mode session, Fig. 9G depicts the operation of the system during the two-way broadcast/interactive session, Fig. 9H depicts the operation of the system during a broadcast-only session, and Fig. 9I depicts the steps performed to terminate a broadcast session.

Fig. 6A shows a case 1, wherein the broadcast and two-way service areas (SAs) are the same, and the satellite footprints (FPs) are different. In this case there is a single beam to/from the broadcast satellite 1, the BFS 3 is in the same beam as the user terminal 6, and the gateway 8 and the user terminal 6 see the same NGSO satellite.

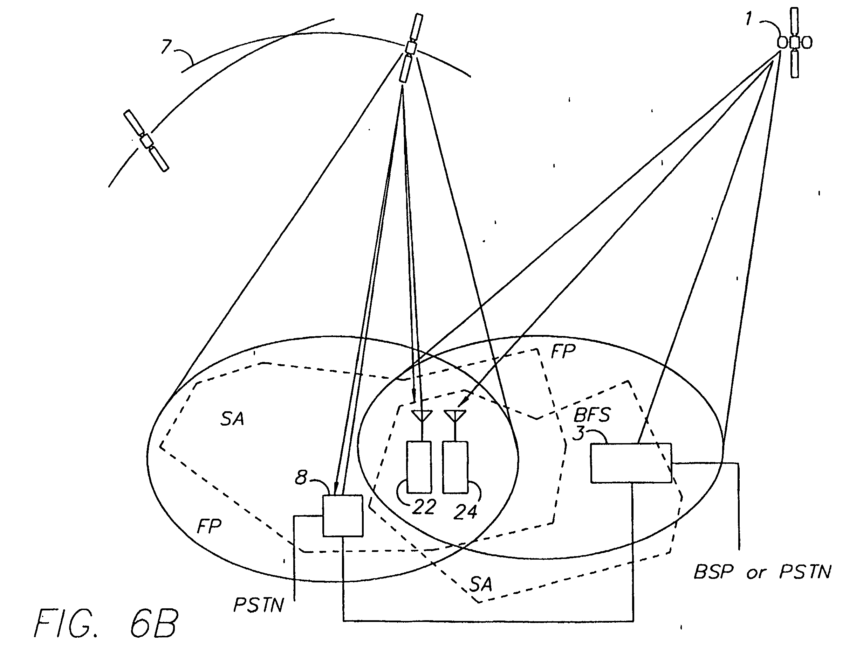

Fig. 6B shows a case 2, wherein the broadcast and two-way service areas are different, and wherein the satellite footprints are different. There is a single beam to/from the broadcast satellite 1, the BFS 3 is in the same beam as the user terminal 6, and the gateway 8 and user terminal 6 see the same NGSO satellite.

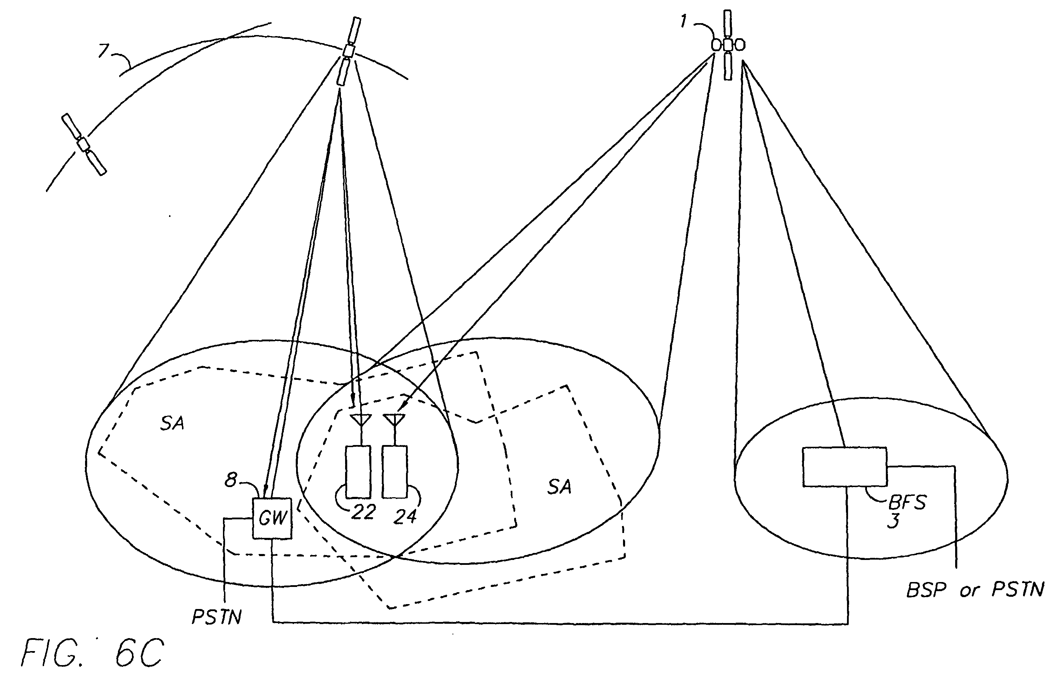

Fig. 6C shows a case 3, wherein the broadcast and two-way service areas are different, and wherein the satellite footprints are different. In case 3 there are multiple beams to/from the broadcast satellite 1, the BFS 3 is in a different beam than the user terminal 6, the gateway 8 and user terminal 6 see the same NGSO satellite, and the SCT 22 and BIU 24 are in the overlapped SA.

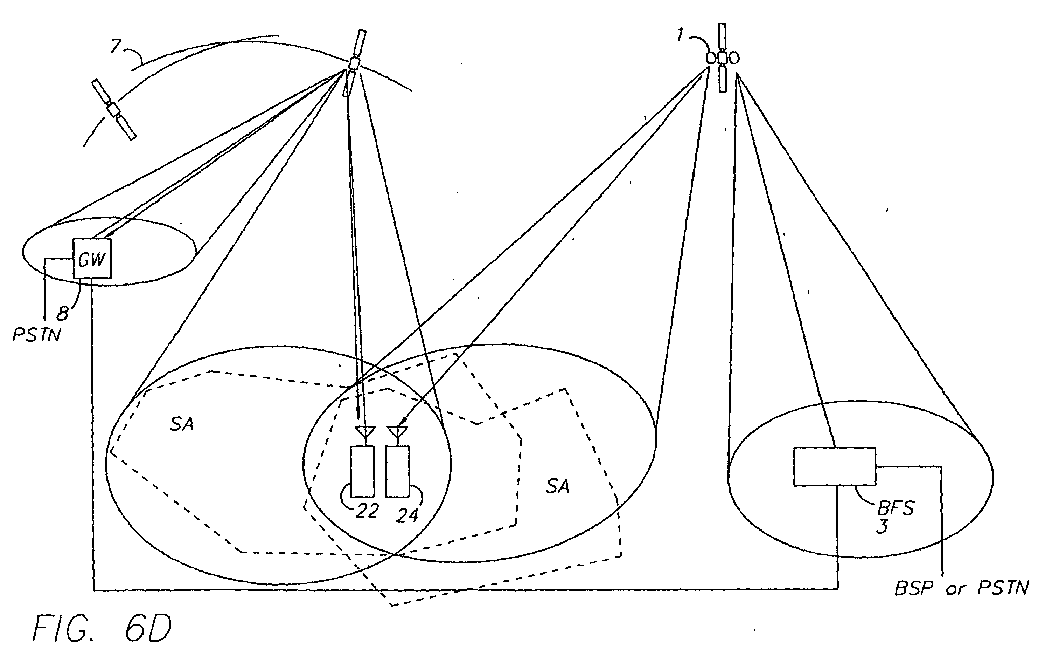

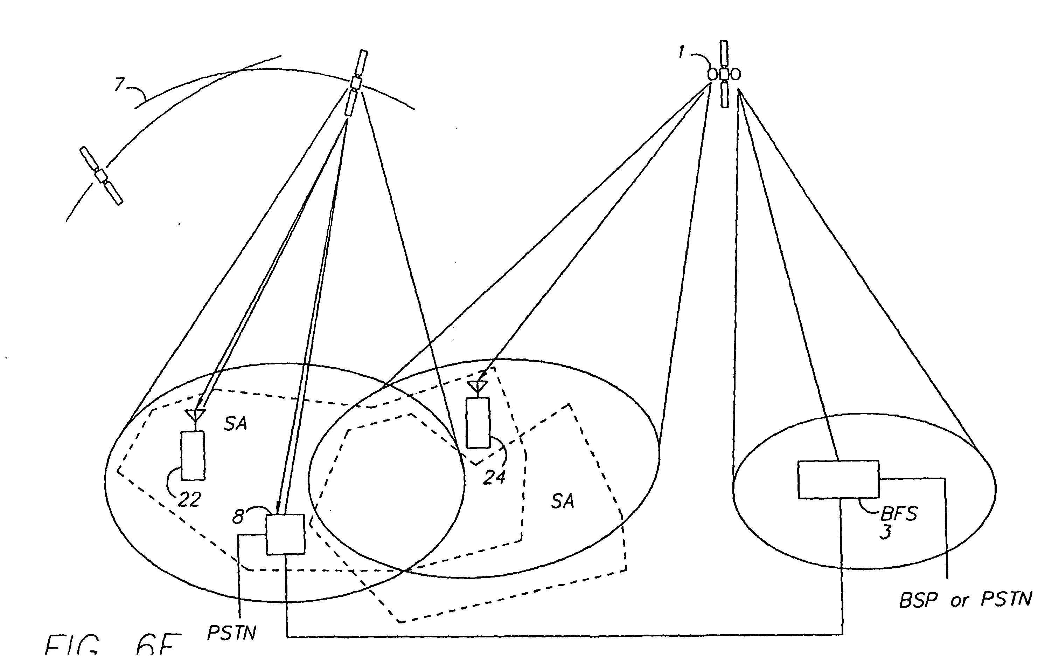

Fig. 6D shows a case 4, wherein the broadcast and two-way service areas are different, and the satellite footprints are different. There are multiple beams to/from the broadcast satellite 1, the BFS 3 is in a different beam than the user terminal 6 (case 4a), the gateway 8 is in a different beam than the user terminal 6 (case 4b), the gateway 8 and BFS 3 are in different beams than the user terminal 6 (case 4c), the gateway 8 and user terminal 6 see the same NGSO satellite, and the SCT 22 and BIU 24 are in the non-overlapped area.

Fig. 6E shows a case 5, wherein the broadcast and two-way service areas are different, and the satellite footprints are different. There are multiple beams to/from the broadcast satellite 1. The gateway 8 and/or the BFS 3 can be in different beam(s) than the user terminal 6, and the gateway 8 and user terminal 6 see the same NGSO satellite. The SCT 22 and BIU 24 are in a non-overlapped area, the SCT 22 and BIU 24 are in the same service area, and the SCT 22 and-BIU 24 (actually at least the broadcast receiver of the BIU 24) are located remotely from each other.

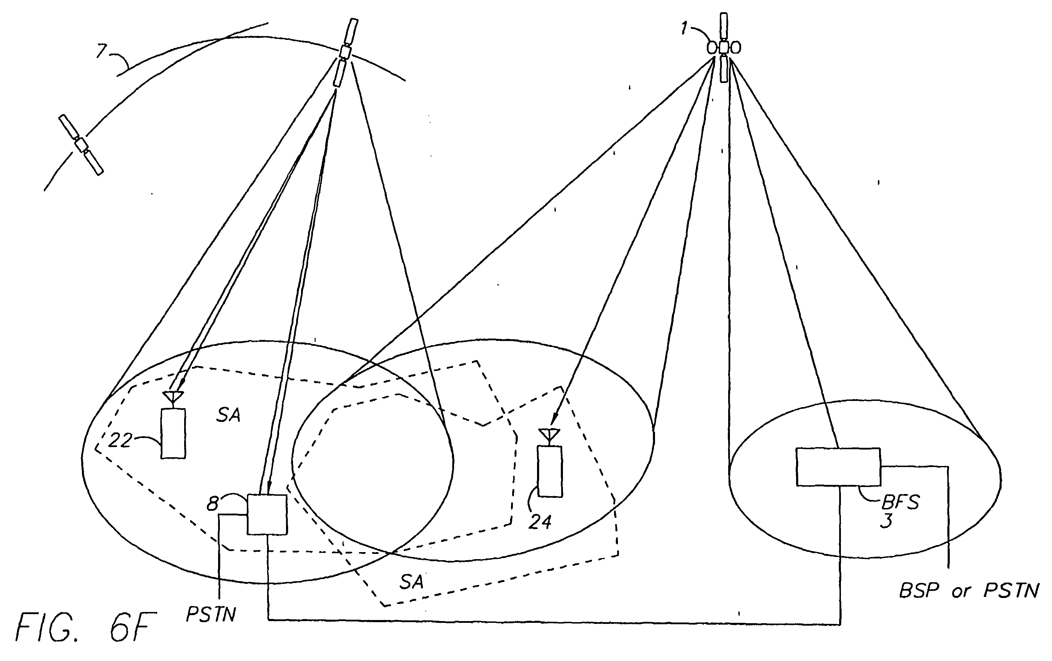

Finally, Fig. 6F shows a case 6, wherein the broadcast and two-way service areas are different, and the satellite footprints are different. There are multiple beams to/from the broadcast satellite 1. The gateway 8 and/or the BFS 3 can be in different beam(s) than the user terminal 6, and the gateway 8 and user terminal 6 see the same NGSO satellite. The SCT 22 and BIU 24 are in the non-overlapped service area, the SCT 22 and BIU 24 are in different service areas, and the SCT 22 and BIU 24 (again, actually at least the broadcast receiver of the BIU 24) are located remotely from each other.

Having described a number of possible system topologies, reference is now made to Figs. 7A-7H for depicting various operating modes of the system. Reference should also be made to the logic flow diagrams of Figs. 9A-9I, particularly for the two-way broadcast/interactive session and broadcast-only modes of operation.

Fig. 7A shows a mode 1 case of a broadcast-only session, specifically session setup and session operation. The NGSO 7 system is used to register the user onto the network. The NGSO 7 system is also used to set up the session. The NGSO 7 system authorizes and instructs the BFS 3 of the programming and content desired. Once the session is setup and the broadcast signal is acquired, the broadcast session begins. The NGSO 7 system goes on-line until notified that the broadcast session is complete. The NGSO 7 system then performs a log out function, communicates session complete status, billing is performed, and then all units go to stand by.

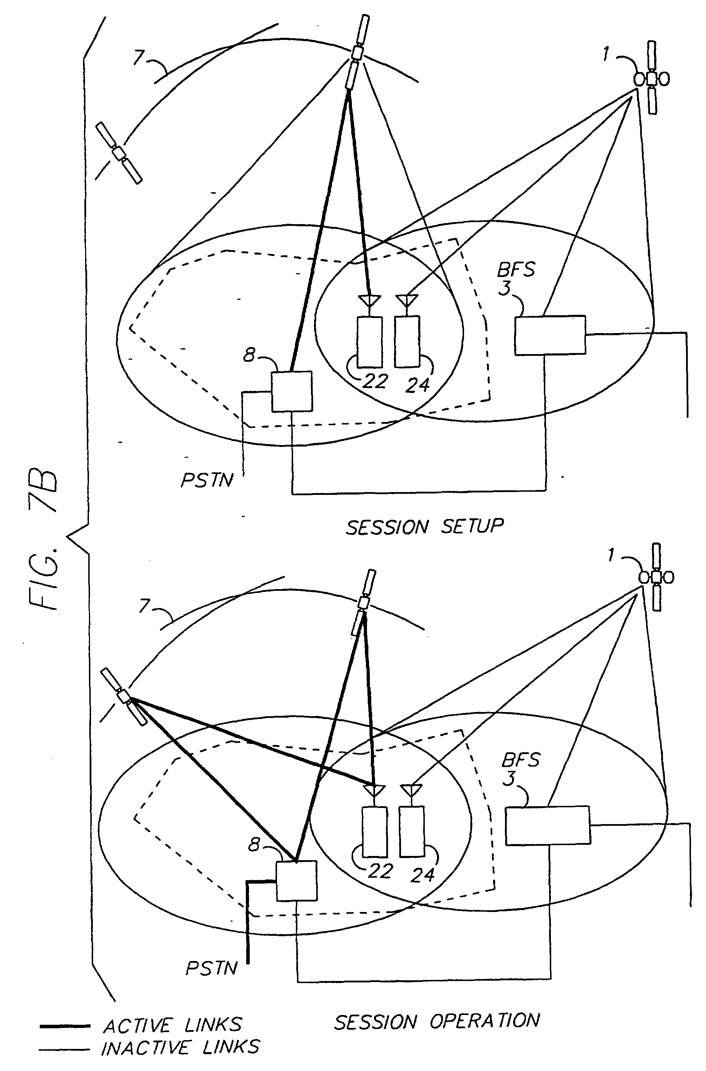

Fig. 7B shows a mode 2 case of a telephony only session. The NGSO 7 system is used to register the user onto the network and to setup the session. The NGSO 7 system authorizes and the gateway 8 then sets up the telephone call to or from the PSTN 11. The NGSO 7 system then performs a log out function, communicates session complete status, billing is performed, and then all units go to stand by.

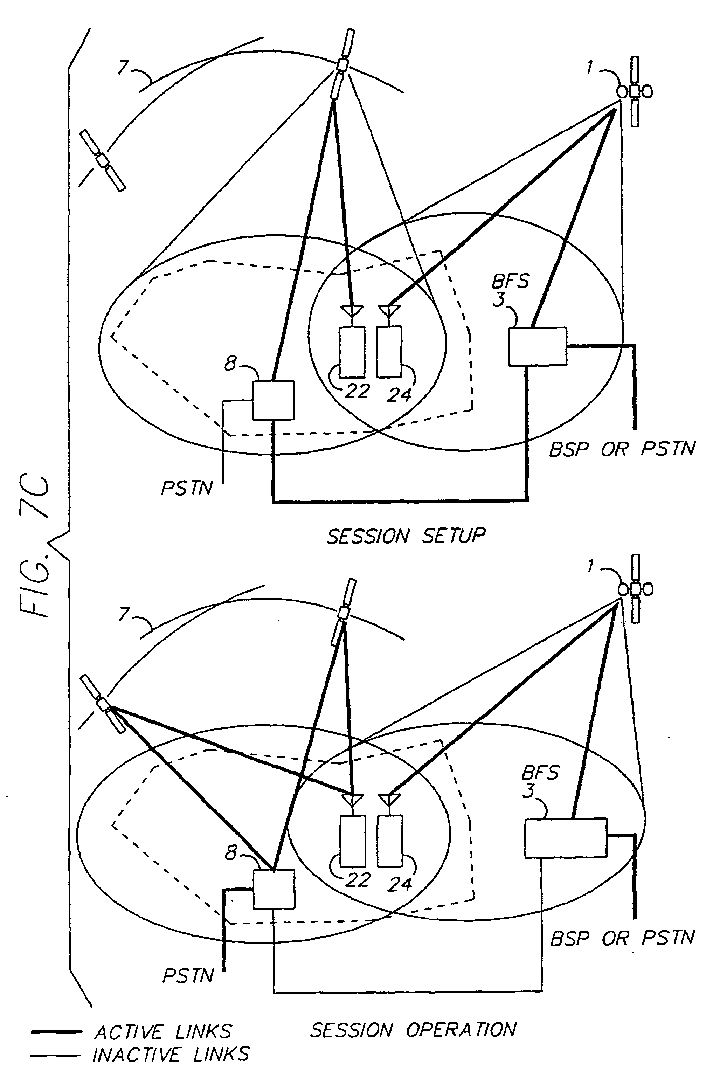

Fig. 7C shows a mode 3 case of a simultaneous telephony and broadcast session. The NGSO 7 system is used to register the user onto the network and is used to set up the session. The NGSO 7 system authorizes and instructs the BFS 3 of the programming and content desired. Once the session is set up and the broadcast signal is acquired the broadcast session begins.

During the broadcast session the user terminal 6 can request telephony services. The gateway 8 processes the telephony request and sets up the call, or receives a service request. The gateway 8 then processes the call and a simultaneous telephone session is begun. The broadcast and the telephony sessions are independent. When the telephony session is complete the call is logged and billed as a telephony call. The NGSO 7 system then goes off line until notified that the broadcast session is complete. The NGSO 7 system then performs a log out function, communicates session complete status, broadcast billing is performed, and then all units go to stand by.

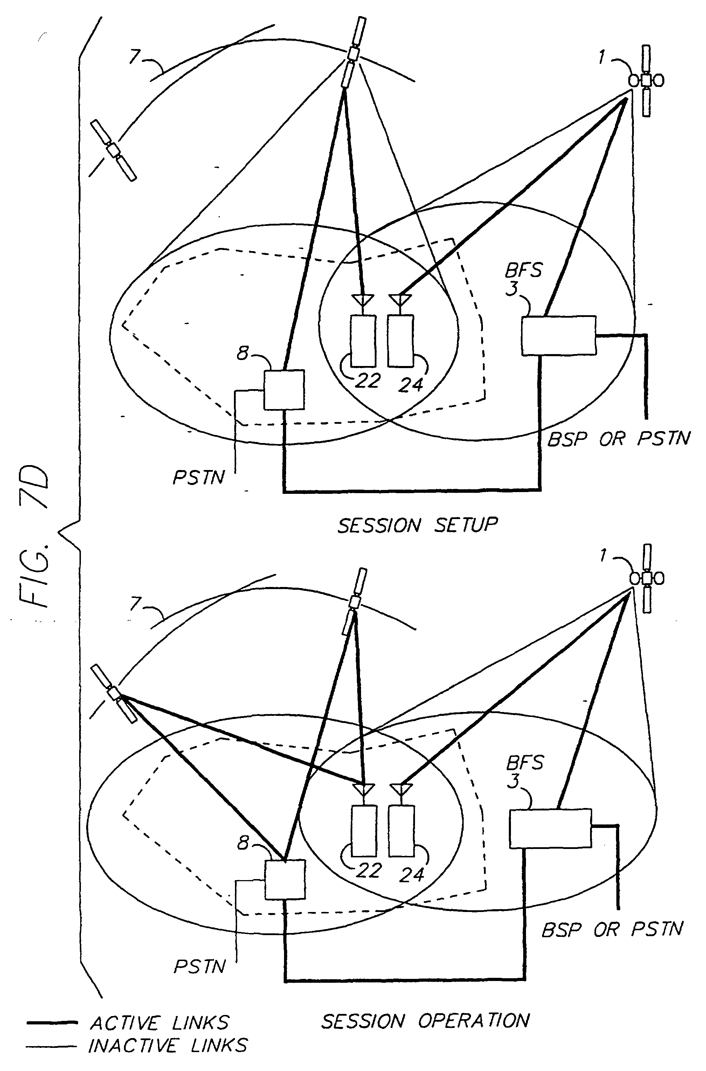

Fig. 7D shows a mode 4 case of an interactive broadcast session. The NGSO 7 system is used to register the user onto the network and is also used to setup the session. The NGSO 7 system authorizes and instructs the BFS 3 of the programming and content desired. Once the session is setup and the broadcast signal is acquired the broadcast session begins. The SCT 22 remains connected to the gateway 8 and the BFS 3 and thence to the BSP 21 or the PSTN 11 at the BFS 3. The user terminal 6 sends messages and commands to the gateway 8 and thence to the BFS 3 and the BSP 21, and the BSP 21 responds to the commands and messages accordingly. The broadcast and the telephony sessions are interactive with requests and responses by each. The BSP 21, or data from a PSTN 11 connection, can provide data to the BFS 3. Information and/or data and files can thus be sent to the SCT 22 or to the broadcast receiver of the BIU 24 in an optimum manner. The telephony session may be disconnected without disconnecting the broadcast function, and conversely the broadcast session may be disconnected without disconnecting the telephony session. When the telephony session is complete the call is logged and billed as a telephony call. The NGSO 7 system then goes offline until notified that the broadcast session is complete at which time the NGSO 7 system performs a log out function, communicates session complete status, broadcast billing is performed, and all units then go to stand by.

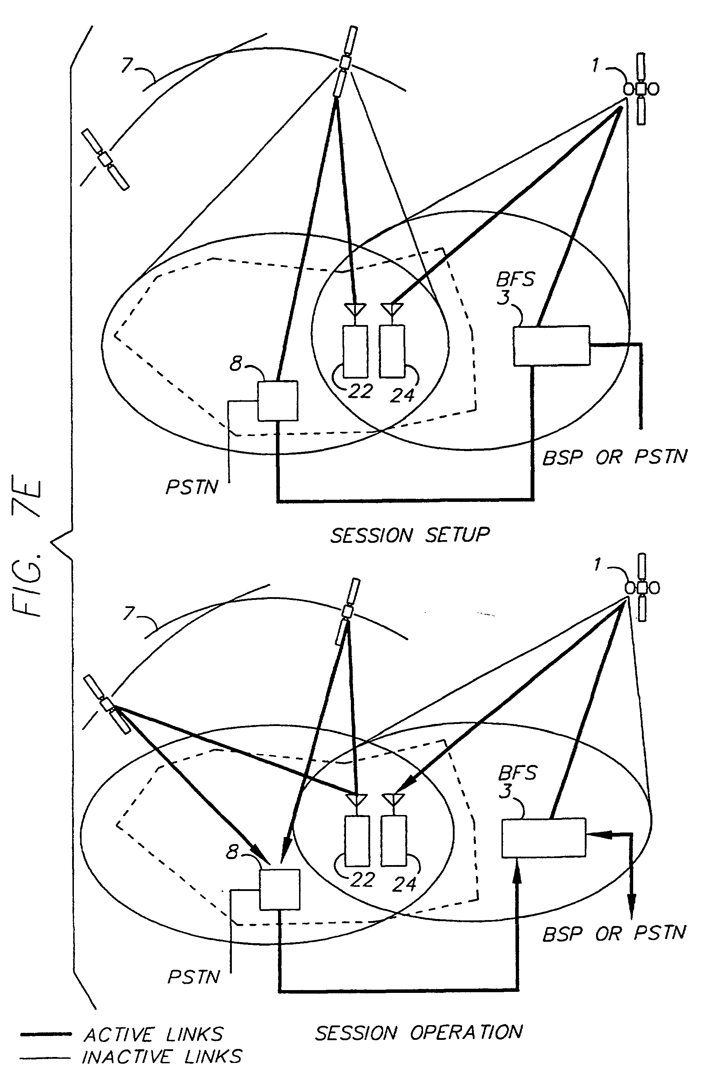

Fig. 7E shows a mode 5 case of a semi-interactive broadcast session. The NGSO 7 system is used to register the user onto the network and to set up the session. The NGSO 7 system authorizes and then instructs the BFS 3 of the programming and content desired. Once the session is setup and the broadcast signal is acquired the broadcast session begins. The SCT 22 remains connected to the gateway 8 and the BFS 3 and thence to the BSP 21 or the PSTN 11 of the BFS 3. The user terminal 6 sends messages and commands to the gateway 8 and then to the BFS 3 and the BSP 21. The BSP 21 responds to the commands and messages accordingly over the broadcast link. The broadcast and the telephony sessions are interactive with requests and responses by each. As in the case of mode 4 (Fig. 7D) the BSP 21, or data from a PSTN 11 connection, can provide data to the BFS 3. Information and/or data in files are sent to the broadcast receiver of the BIU 24. The telephony session may be disconnected without disconnecting the broadcast function. When the telephony session is complete the call is logged and billed as a telephony call. The NGSO 7 system goes offline until notified that the broadcast session is complete. The NGSO 7 system then performs a log out function, communicates session complete status, broadcast billing is performed, and then all units go to stand by.

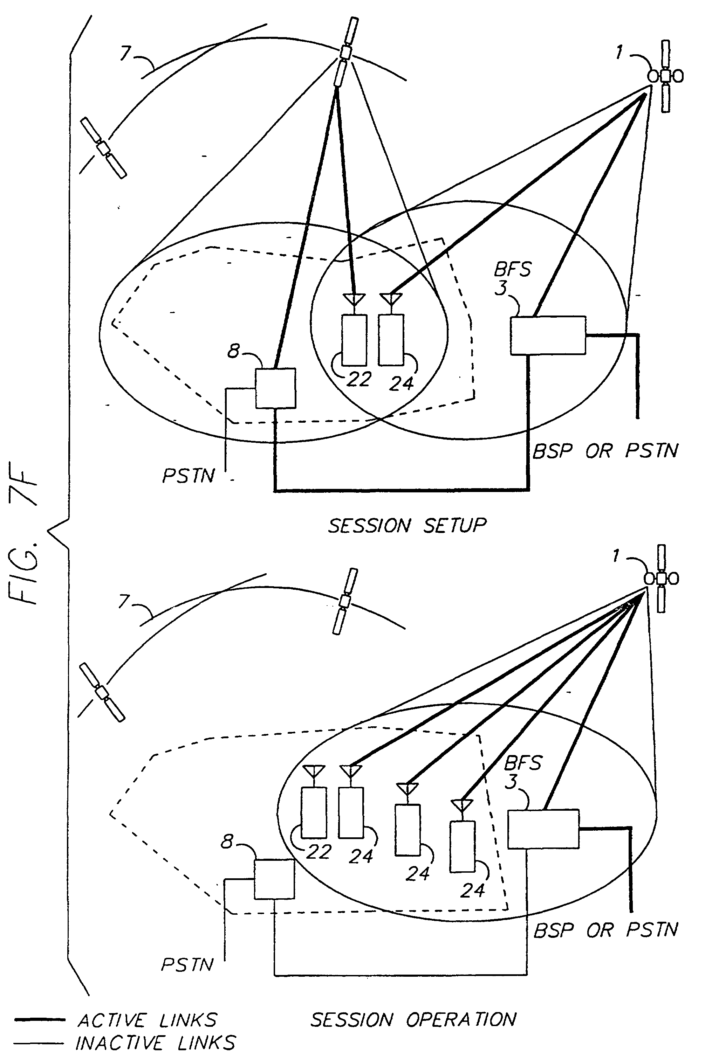

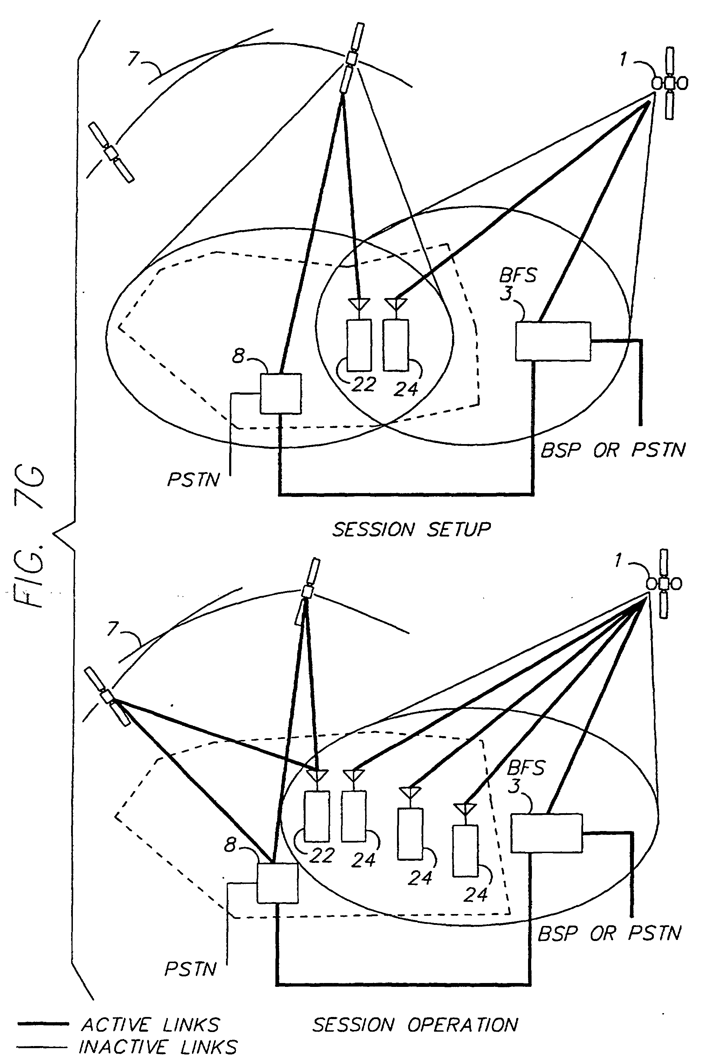

Fig. 7F shows a mode 6 case of a multiple broadcast operation session. The NGSO 7 is used to register the user onto the network and to set up the session. The NGSO 7 system authorizes and instructs the BFS 3 of the programming and content desired. Once the session is set up and the broadcast signal is acquired the broadcast session begins. The NGSO 7 system then can set up one or more additional broadcast signal links which all run independently. The broadcast links may be made via the same satellite 1 or different satellites, and may be in the same or different service areas (the same service area case is shown in Fig. 7F). The broadcast links do not have to contain the same content or programming. The NGSO 7 system then goes offline until notified that the broadcast session is complete at which time the NGSO 7 system performs a log out function, communicates session complete status, billing is performed, and then all units go to stand by.

Fig. 7G shows a mode 7 case of a multiple broadcast control operation session. The NGSO 7 system is used to register the user onto the network and to set up the session. The NGSO 7 system authorizes and instructs the BFS 3 of the programming and content desired. Once the session is set up and the broadcast signal is acquired the broadcast session begins. The NGSO 7 system then can setup additional broadcast signal links which all run independently. As was the case for mode 6, the broadcast links may be via the same satellite 1 or different satellites, and may be in the same or different service areas. The broadcast links furthermore do not have to have the same content or programming. The NGSO 7 system stays on line and interacts either with all BIU 24 broadcast receivers simultaneously, or interacts with the BIU 24 broadcast receivers independently one at a time, or interacts with the BIU 24 broadcast receivers in sub-groups. The NGSO 7 system may also go off line while the broadcast function is in operation. If online, the NGSO 7 system can disconnect any or all of the BIU 24 broadcast receivers at any time. The logging out of each broadcast receiver is independently logged and billed. This procedure is continued until all broadcast receivers are disconnected. The NGSO 7 system then performs a log out function, communicates session complete status, billing is performed, and all units go to stand by.

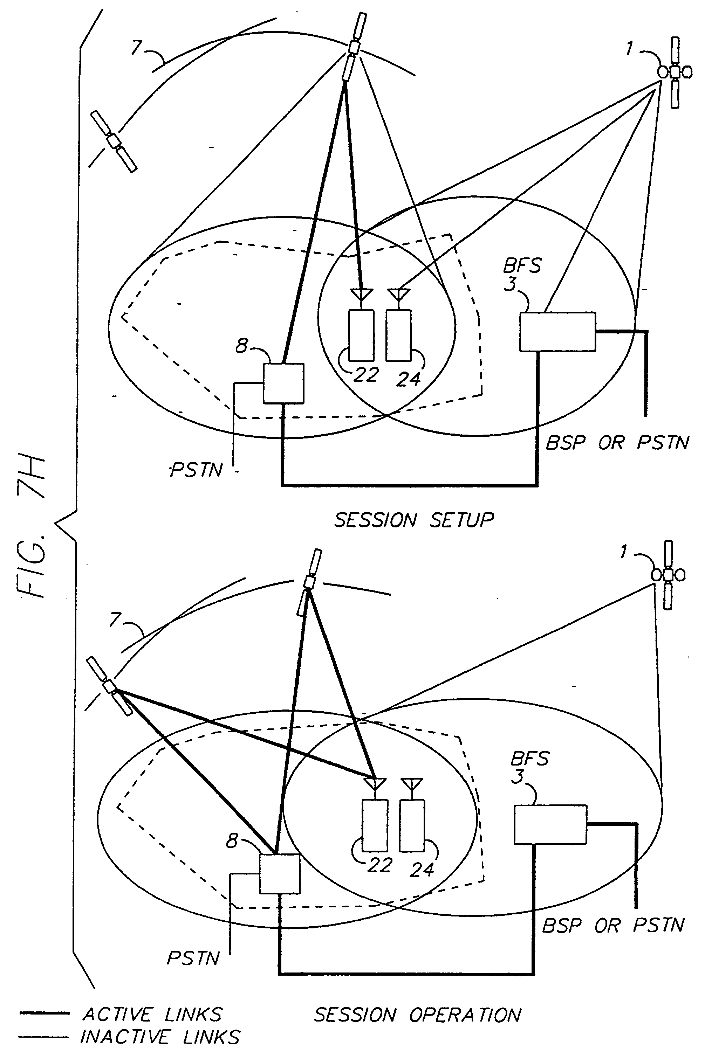

Fig. 7H shows a mode 8 case of a telephony connection to the BSP 21. The NGSO 7 system is used to register the user onto the network and to set up the session. The NGSO 7 system authorizes and requests access to the BFS 3 network. The BFS 3 authorizes access to the BSP 21 or PSTN 11 at the BFS 3. The SCT 22 connects to the BSP 21 or the PSTN at the BFS 3, the session begins, and then the SCT 22 goes off line. The NGSO 7 system then performs a log out function, communicates session complete status, billing is performed, and then all units go to stand by.

Referring to Fig. 8, the Broadcast Feederlink Station (BFS) 3 contains several modules. Basic functions of the BFS 3 include provision of interfaces to the gateway 8, to the ISPs 20 and the BSPs 21, and to the NGSO Ground Operations Control Center (GOCC) 17. The BFS 3 also provides data processing of the uplink broadcast signals, provides for uplinking the broadcast signal, and provides for authorization and the initiation of service.

The signals from the gateway 8 are connected to a Two Way Data Interface 501. These signals may be directed toward and from the PSTN 11 via a PSTN Connection and Signalling Unit 502, and may include roaming information and authorizations. Authorization signals from the PSTN 11, or from the gateway 8, or from the Service Provider are connected via the Two Way Data Interface 501 to a Service Control Processor 503. The Service Control Processor 503 is connected by two way connections to and from a Visitor User Location Register (VULR) 504 and a Home User Location Register (HULR) 505. Usage data, resources identification and quantity, user connections, as well as other pertinent information is connected from the Two Way Data Interface 501 to the Broadcast Feeder Station Manager 506. The Broadcast Feeder Station Manager 506 provides a two-way connection between the BFS 3 and the GOCC 17 for managing the resources of the BFS 3. The BFS Manager 506 takes individual broadcast access details, either call records, session records, or other similar data, and then compresses, summarizes, and formats the multiple user information records. This system usage data is then provided to a router 507 for delivery through the Ground Data Network 19 to the GOCC 17 for network planning, trend analysis, and general resource allocation. Incoming instructions from the GOCC 17 via the GDN 19 are applied to the Router 507 and are delivered to a BFS Resource Manager 508. The Resource Manager 508 provides detailed instructions to a Broadcast Resource Configuration Unit 509 which controls a frequency controller 544 of a BFS RF Subsystem 510, as well as the configuration of Switches 550 used to controlling the transit RF chains 542.

Log on and service authorization information from the Service Control Processor 503 is applied to the Two Way Data Interface Unit 501 for delivery to the gateway 8 or to the service provider 20 or 21. In the case of the service provider, the two way data interface relays the request for service to a BFS Inbound User Interface Unit 520. Authorizations from the service provider are applied to a BFS outbound to User Interface Unit 521. Log on and service authorization information is applied to a Service Provider (SP) Authorization Processor 522 and, after authorization processing, is sent to a gateway 8 Response Manager 523, then to the Two Way Data Interface 501 and the Service Control Processor 503, and is then input to the HULR 504 and/or the VULR 505 as appropriate.

Two-way inbound data is routed by the Two Way Data Interface 501 to the BFS Inbound User Interface Unit 520 and then to the service provider. The service provider uses the two way inbound data in various ways according to instructions, algorithms, and other processes. Responses to the inbound data are formed by the service provider and messages, data, files and other responses are transmitted from the service provider to the BFS 3. These signals are applied to the BFS Outbound to User Interface Unit 521 and, depending on conditional switches, and/or software flags, to circuitry that directs the incoming data streams to one of the three response managers (531, 532, 533) within a Broadcast Data Processor 530. Urgent messages are sent to the Urgent Broadcast Response Manager 531 and, depending on resources available, are directed by either a normal path to the gateway 8 Response Manager 523, or if the gateway 8 is not available or the links to the user are obstructed or otherwise not available, the messages, signals, or files are sent to the Broadcast Response Manager 532. In general, non-urgent messages, longer files, and long messages are directed toward the Broadcast Response Manager 532. If two-way interactive methods are not being used, and the responses are only to be routed to the broadcast mode, then the signals, messages, files and other data are sent directly to the Broadcast Only Data Manager 533. The data streams from the Broadcast Response Manager 532 and/or the Broadcast Only Data Manager 533 are applied to a User Data Processor 534 for formatting, packetizing, identifying and other processing. The user's data stream is then merged with other users' data streams in a Baseband Signal Processing Unit 535. The Baseband Signal Processor 535 passes the formatted, merged data to an Uplink Processor 536 which adds and then merges framing, timing, synchronization, and other overhead messaging to the data stream from a Framing, Timing, and Overhead Unit 537. This combined data stream is then applied to a Modulator 541 in the BFS RF Subsystem 510. The Modulator 541 forms a part of one of a plurality of the transmitter channels 542. The modulated data stream is next applied to an Up Converter 543 which is controlled by the Frequency Control Unit 544. The signals are then amplified by a High Power Amplifier (HPA) 545 and sent to a Multiplexer 546 where the signals are multiplexed with signals from other RF Transmitter chains. The multiplexed channels are then applied (if required) to a Duplexer 547. Finally, the signals are applied to an antenna 548 which directs the signal in the direction of the broadcast satellite 1 using the broadcast feeder uplink 4.

After the session is terminated detailed access record information is passed from the Response Managers 531-533 to the Broadcast Access Detail Record (a computer) 538, and after summarizing and processing, the records are passed to a Broadcast Billing System 539 where an accounting for the broadcast service is usage is performed.

Although described in the context of presently preferred embodiments, it should be appreciated that a number of modifications can be made to these embodiments, and that the invention may be practiced using other embodiments. For example, the BFS 3 can offer ISP services directly, without connection to a separate ISP 20. Also, there can be more than one ISP 20, and one of these can be the BFS 3. Further by example, several gateways 8 can share a single BFS 3, and several of the BFS 3 can share a single broadcast satellite 1. Further by example, inter-satellite links between the GSO synchronous high altitude satellites 1 can be provided to enhance the service capabilities of the system. Further by example, the service area of the BFS 3 does not have to be the same as the service area of the gateway 8, but may be larger or smaller.

Also, the teachings of this invention are not limited to providing any one type of broadcast service. While described above primarily in the context of providing high speed Internet access using the broadcast service, other broadcast services, such as television, can also be provided. Furthermore, two or more frequencies can be used for the broadcast link 5, such as frequencies in two or more of the C-band, Ku-band, Ka-band, etc. In a related manner, the BIU 24 may operate with more than one frequency and modulation type.

It should also be realized that a number of the steps illustrated in Figs. 9A-9I could be performed in other than the order shown, while still obtaining the desired result.

## Claims

1. A communications system, comprising:
a first satellite system (1, 3) providing a terrestrial service area with a broadcast communication service (5);
a second satellite system (7, 8) providing at least a portion of the terrestrial service area with a two-way communication service (9, 10); and
a user terminal (6) comprising a transceiver for requesting, through said second satellite system, broadcast communication service, and further comprising a receiver for receiving the requested broadcast communication service through said first satellite system, **characterized in that**
a bidirectional communications link (14, 16) is provided between said first satellite system and said second satellite system, and
said first satellite system includes a ground segment controller (3) for using predetermined criteria to selectively route the requested broadcast communication service to said user terminal by transmitting the requested broadcast communication service on an uplink (4) to a satellite (1) of said first satellite system for reception by said receiver, or by transmitting the requested broadcast communication service over said bidirectional link to said second satellite system for reception by said transceiver.

2. A communications system as in claim 1, wherein the first satellite system (1, 3) is **characterized by** at least one satellite (1) that orbits the Earth at a higher altitude than satellites (7) of the second satellite system (7, 8).

3. A communications system as in claim 1 or 2, wherein the first satellite system (1, 3) is **characterized by** at least one satellite (1) that orbits the Earth in a geosynchronous orbit, and wherein the second satellite system (7, 8) is comprised of a plurality of satellites (7) that orbit in the earth in a non-geosynchronous orbit.

4. A communications system as in any preceding claim, wherein said second satellite system (7, 8) and said user terminal (6) are operable together for logging in said user terminal to said communication system and for determining a roaming/not roaming status of said user terminal.

5. A communications system as in any preceding claim, wherein the broadcast communication service (5) conveys data packets to said user terminal (6) from a data communications network that is coupled to said first satellite system (1, 3).

6. A communications system as in claim 5, wherein said second satellite system (7, 8) conveys data packets to said user terminal (6) from a data communications network that is coupled to said first satellite system (1, 3).

7. A communications system as in any one of claims 1 to 4, wherein the broadcast communication service (5) conveys data packets to said user terminal (6) from an Internet server that is coupled to said first satellite system (1, 3) through an Internet Service Provider (20).

8. A communications system as in claim 7, wherein said second satellite system (7, 8) conveys data packets to said user terminal (6) from an Internet server that is coupled to said first satellite system (1, 3) through an Internet Service Provider (20).

9. A communications system as in any preceding claim, wherein the broadcast communication service (5) conveys television signals to said user terminal (6).

10. A communications system as in claim 1, wherein the two-way communication service (9, 10) is **characterized by** a bidirectional point-to-point communication service.

11. A communications system as in claim 10, wherein the bidirectional communications link (14, 16) is **characterized by** a link between a ground segment controller of said first satellite system (1, 3) and a ground segment controller of said second satellite system (7, 8).

12. A communications system as in claim 11, wherein the transceiver makes service requests to establish a connection with a data communications network server that is bidirectionally coupled to said ground segment controller of said first satellite system (1, 3).

13. A communications system as in claim 11, wherein the transceiver makes service requests to establish a connection with an Internet server that is bidirectionally coupled to said ground segment controller of said first satellite system (1, 3) though an Internet Service Provider (20).

14. A communications system as in claim 11, wherein the transceiver makes service requests to establish a connection with a broadcast service provider that is coupled to said ground segment controller of said first satellite system (1, 3).

15. A method for providing data to a user terminal (6) in a satellite-based communications system, comprising the steps of:
operating the user terminal (6) to log in to the communications system using log in protocols of a non-geosynchronous orbit satellite communication system (7, 8) ;
operating the user terminal to make a service request to the communications system using a service request protocol of the non-geosynchronous orbit satellite communication system; and
in response to the service request, establishing a link with a source of data that is coupled to a broadcast satellite communication system (1, 3), **characterized in that** the method further comprises:
using a predetermined criteria, selectively delivering data from the source of data to the user terminal through at least one satellite (7) of the non-geosynchronous orbit satellite communication system or delivering data from the source of data to the user terminal through at least one satellite (1) of the broadcast satellite communication system.

16. A method as in claim 15, wherein operating the user terminal (6) to log in includes performing a position location operation at a terrestrial gateway (8) to determine a location of the user terminal.

17. A method as in claim 15, wherein operating the user terminal (6) to log in includes performing a position location operation at a terrestrial gateway (8) to determine a roaming/not roaming status of the user terminal.

18. A method as in any one of claims 15 to 17, wherein selectively delivering includes determining at least a number of bytes of data to be delivered.

19. A method as in any one of claims 15 to 18, wherein selectively delivering includes determining at least a type of data to be delivered.

20. A method as in any one of claims 15 to 19, wherein selectively delivering includes determining that the user terminal (6) is authorized to receive the data through at least one satellite (7) of the non-geosynchronous orbit satellite communication system (7, 8) or the broadcast satellite communication system (1, 3).

21. A method as in any one of claims 15 to 20, wherein selectively delivering includes determining that the user terminal (6) is authorized to receive the data from the source of data.

22. A method as in any one of claims 15 to 21, wherein the user terminal (6) is one of a fixed user terminal or a mobile user terminal.

23. A method as in any of claims 15 to 22, wherein for a case where the data is being delivered through the at least one satellite (1) of the broadcast satellite communication system (1, 3), the method is further **characterized by** concurrently making a telephony connection to the user terminal (6) through at least one satellite (7) of the non-geosynchronous orbit satellite communication system (7, 8).

24. A method as in claim 15, wherein the user terminal (6) is **characterized by** a data processor that is coupled to a satellite transceiver and to a satellite receiver, and wherein the method is further **characterized by**:
operating the data processor to make an Internet service request that is transmitted through the satellite transceiver to a terrestrial gateway (8) via at least one non-geosynchronous orbit satellite (7);
relaying the Internet service request from the gateway to an Internet entity that is to fulfill the service request; and
fulfilling the service request by transmitting data from the Internet entity to the data processor via a geosynchronous orbit satellite (1) and the satellite receiver.

25. A method as in claim 24, wherein the step of fulfilling includes a step of selecting the path based on at least one of a nature of the data or an amount of data to be transmitted.

26. A method as in claim 15, wherein the user terminal (6) is **characterized by** a satellite transceiver, a satellite receiver and a video receiver, and wherein the method is further **characterized by**:
operating the user terminal to make a service request to a source of video programming that is transmitted through the satellite transceiver to a terrestrial gateway (8) via at least one non-geosynchronous orbit satellite (7) of the non-geosynchronous orbit satellite communication system (7, 8);
relaying the service request from the gateway to the source of video programming that is to fulfill the service request; and
fulfilling the service request by using a predetermined criteria to selectively transmit video programming from the source to the video receiver via a geosynchronous orbit satellite (1) and the satellite receiver or to the video receiver via said at least one non-geosynchronous orbit satellite (7) and said satellite transceiver.

## Patentansprüche

1. Ein Kommunikationssystem, das folgende Merkmale aufweist:
ein erstes Satellitensystem (1, 3), das einen terrestrischen Dienstbereich mit einem Rundsendungskommunikationsdienst (5) versieht;
ein zweites Satellitensystem (7, 8), das zumindest einen Abschnitt des terrestrischen Dienstbereichs mit einem Zweiweg-Kommunikationsdienst (9, 10) versieht; und
ein Benutzerendgerät (6), das ein Sende-/Empfangsgerät zum Anfordern eines Rundsendungskommunikationsdienstes durch das zweite Satellitensystem aufweist und ferner einen Empfänger zum Empfangen des angeforderten Rundsendungskommunikationsdienstes durch das erste Satellitensystem aufweist, **dadurch gekennzeichnet, daß**
eine bidirektionale Kommunikationsverbindung (14, 16) zwischen dem ersten Satellitensystem und dem zweiten Satellitensystem vorgesehen ist, und
das erste Satellitensystem eine Bodensegmentsteuerung (3) zum Verwenden von vorbestimmten Kriterien umfaßt, um den angeforderten Rundsendungskommunikationsdienst durch Senden des angeforderten Rundsendungskommunikationsdienstes auf einer Aufwärtsverbindung (4) zu einem Satelliten (1) des ersten Satellitensystems zum Empfang durch den Empfänger oder durch Senden des angeforderten Rundsendungskommunikationsdienstes über die bidirektionale Verbindung zu dem zweiten Satellitensystem zum Empfang durch das Sende-/Empfangsgerät selektiv zu dem Benutzerendgerät zu leiten.

2. Ein Kommunikationssystem gemäß Anspruch 1, bei dem das erste Satellitensystem (1, 3) durch zumindest einen Satelliten (1) gekennzeichnet ist, der die Erde auf einer größeren Höhe umkreist als Satelliten (7) des zweiten Satellitensystems (7, 8).

3. Ein Kommunikationssystem gemäß Anspruch 1 oder 2, bei dem das erste Satellitensystem (1, 3) durch zumindest einen Satelliten (1) gekennzeichnet ist, der die Erde in einer geosynchronen Umlaufbahn umkreist, und bei dem das zweite Satellitensystem (7, 8) aus einer Mehrzahl von Satelliten (7) zusammengesetzt ist, die die Erde in einer nicht-geosynchronen Umlaufbahn umkreisen.

4. Ein Kommunikationssystem gemäß einem der vorhergehenden Ansprüche, bei dem das zweite Satellitensystem (7, 8) und das Benutzerendgerät (6) zusammen betreibbar sind, um das Benutzerendgerät in das Kommunikationssystem anzumelden und um einen Roaming-/Nicht-Roaming-Zustand des Benutzerendgeräts zu bestimmen.

5. Ein Kommunikationssystem gemäß einem der vorhergehenden Ansprüche, bei dem der Rundsendungskommunikationsdienst (5) Datenpakete von einem Datenkommunikationsnetz, das mit dem ersten Satellitensystem (1, 3) gekoppelt ist, zu dem Benutzerendgerät (6) überträgt.

6. Ein Kommunikationssystem gemäß Anspruch 5, bei dem das zweite Satellitensystem (7, 8) Datenpakete von einem Datenkommunikationsnetz, das mit dem ersten Satellitensystem (1, 3) gekoppelt ist, zu dem Benutzerendgerät (6) überträgt.

7. Ein Kommunikationssystem gemäß einem der Ansprüche 1 bis 4, bei dem der Rundsendungskommunikationsdienst (5) Datenpakete von einem Internetserver, der über einen Internet-Dienstanbieter (20) mit dem ersten Satellitensystem (1, 3) gekoppelt ist, zu dem Benutzerendgerät (6) überträgt.

8. Ein Kommunikationssystem gemäß Anspruch 7, bei dem das zweite Satellitensystem (7, 8) Datenpakete von einem Internetserver, der über einen Internet-Dienstanbieter (20) mit dem ersten Satellitensystem (1, 3) gekoppelt ist, zu dem Benutzerendgerät (6) überträgt.

9. Ein Kommunikationssystem gemäß einem der vorhergehenden Ansprüche, bei dem der Rundsendungskommunikationsdienst (5) Fernsehsignale zu dem Benutzerendgerät (6) überträgt.

10. Ein Kommunikationssystem gemäß Anspruch 1, bei dem der Zweiweg-Kommunikationsservice (9, 10) durch einen bidirektionalen Punkt-zu-Punkt-Kommunikationsdienst gekennzeichnet ist.

11. Ein Kommunikationssystem gemäß Anspruch 10, bei dem die bidirektionale Kommunikationsverbindung (14, 16) durch eine Verbindung zwischen einer Bodensegmentsteuerung des ersten Satellitensystems (1, 3) und einer Bodensegmentsteuerung des zweiten Satellitensystems (7, 8) gekennzeichnet ist.

12. Ein Kommunikationssystem gemäß Anspruch 11, bei dem das Sende-/Empfangsgerät Dienstanforderungen stellt, um eine Verbindung mit einem Datenkommunikationsnetzserver herzustellen, der mit der Bodensegmentsteuerung des ersten Satellitensystems (1, 3) bidirektional gekoppelt ist.

13. Ein Kommunikationssystem gemäß Anspruch 11, bei dem das Sende-/Empfangsgerät Dienstanforderungen stellt, um eine Verbindung mit einem Internetserver herzustellen, der durch einen Internet-Dienstanbieter (20) mit der Bodensegmentsteuerung des ersten Satellitensystems (1, 3) bidirektional gekoppelt ist.

14. Ein Kommunikationssystem gemäß Anspruch 11, bei dem das Sende-/Empfangsgerät Dienstanforderungen stellt, um eine Verbindung mit einem Rundsendungs-Dienstanbieter herzustellen, der mit der Bodensegmentsteuerung des ersten Satellitensystems (1, 3) gekoppelt ist.

15. Ein Verfahren zum Liefern von Daten zu einem Benutzerendgerät (6) in einem satellitenbasierten Kommunikationssystem, das folgende Schritte aufweist:
Betreiben des Benutzerendgeräts (6), um dasselbe unter Verwendung von Anmeldungsprotokollen eines Satellitenkommunikationssystems (7, 8) mit einer nicht-geosynchronen Umlaufbahn bei dem Kommunikationssystem anzumelden;
Betreiben des Benutzerendgeräts (6), um unter Verwendung eines Dienstanforderungsprotokolls des Satellitenkommunikationssystems mit einer nicht-geosynchronen Umlaufbahn eine Dienstanforderung an das Kommunikationssystem zu stellen; und
ansprechend auf die Dienstanforderung, Herstellen einer Verbindung mit einer Datenquelle, die mit einem Rundsendungssatellitenkommunikationssystem (1, 3) gekoppelt ist, **dadurch gekennzeichnet, daß** das Verfahren ferner folgenden Schritt aufweist:
unter Verwendung eines vorbestimmten Kriteriums, selektives Liefern von Daten von der Datenquelle zu dem Benutzerendgerät durch zumindest einen Satelliten (7) des Satellitenkommunikationssystems mit einer nicht-geosynchronen Umlaufbahn oder Liefern von Daten von der Datenquelle zu dem Benutzerendgerät durch zumindest einen Satelliten (1) des Rundsendungssatellitenkommunikationssystems.

16. Ein Verfahren gemäß Anspruch 15, bei dem das Betreiben des Benutzerendgeräts (6), um dasselbe anzumelden, ein Durchführen einer Positionslokalisierungsoperation an einem terrestrischen Gateway (8) umfaßt, um einen Ort des Benutzerendgeräts zu bestimmen.

17. Ein Verfahren gemäß Anspruch 15, bei dem das Betreiben des Benutzerendgeräts (6), um dasselbe anzumelden, ein Durchführen einer Positionslokalisierungsoperation an einem terrestrischen Gateway (8) umfaßt, um einen Roming-/Nicht-Roaming-Zustand des Benutzerendgeräts zu bestimmen.

18. Ein Verfahren gemäß einem der Ansprüche 15 bis 17, bei dem das selektive Liefern ein Bestimmen von zumindest einer Anzahl von Bytes von Daten, die geliefert werden sollen, umfaßt.

19. Ein Verfahren gemäß einem der Ansprüche 15 bis 18, bei dem das selektive Liefern ein Bestimmen von zumindest einem Typ von Daten, die geliefert werden sollen, umfaßt.

20. Ein Verfahren gemäß einem der Ansprüche 15 bis 19, bei dem das selektive Liefern ein Bestimmen umfaßt, daß das Benutzerendgerät (6) berechtigt ist, die Daten durch zumindest einen Satelliten (7) des Satellitenkommunikationssystems mit einer nicht-geosynchronen Umlaufbahn (7, 8) oder das Rundsendungssatellitenkommunikationssystem (1, 3) zu empfangen.

21. Ein Verfahren gemäß einem der Ansprüche 15 bis 20, bei dem das selektive Liefern ein Bestimmen umfaßt, daß das Benutzerendgerät (6) berechtigt ist, die Daten von der Datenquelle zu empfangen.

22. Ein Verfahren gemäß einem der Ansprüche 15 bis 21, bei dem das Benutzerendgerät (6) entweder ein stationäres Benutzerendgerät oder ein mobiles Benutzerendgerät ist.

23. Ein Verfahren gemäß einem der Ansprüche 15 bis 22, bei dem für den Fall, daß die Daten durch den zumindest einen Satelliten (1) des Rundsendungssatellitenkommunikationssystems (1, 3) geliefert werden, das Verfahren ferner **dadurch gekennzeichnet ist, daß** dasselbe gleichzeitig eine Fernsprechverbindung mit dem Benutzerendgerät (6) durch zumindest einen Satelliten (7) des Satellitenkommunikationssystems mit einer nicht-geosynchronen Umlaufbahn (7, 8) herstellt.

24. Ein Verfahren gemäß Anspruch 15, bei dem das Benutzerendgerät (6) durch einen Datenprozessor gekennzeichnet ist, der mit einem Satelliten-Sende-/Empfangsgerät und mit einem Satellitenempfänger gekoppelt ist, und bei dem das Verfahren ferner durch folgende Schritte gekennzeichnet ist:
Betreiben des Datenprozessors, um eine Internet-Dienstanforderung zu stellen, die durch das Satelliten-Sende-/Empfangsgerät zu einem terrestrischen Gateway (8) über zumindest einen Satelliten mit einer nicht-geosynchronen Umlaufbahn (7) gesendet wird;
Weiterleiten der Internet-Dienstanforderung von dem Gateway zu einer Internet-Entität, die die Dienstanforderung erfüllen soll; und
Erfüllen der Dienstanforderung durch Senden von Daten von der Internet-Entität zu dem Datenprozessor über einen Satelliten mit einer geosynchronen Umlaufbahn (1) und den Satellitenempfänger.

25. Ein Verfahren gemäß Anspruch 24, bei dem der Schritt des Erfüllens einen Schritt des Auswählens des Wegs auf der Basis zumindest einer Beschaffenheit der Daten oder einer zu sendenden Datenmenge umfaßt.

26. Ein Verfahren gemäß Anspruch 15, bei dem das Benutzerendgerät (6) durch ein Satelliten-Sende-/Empfangsgerät, einen Satellitenempfänger und einen Videoempfänger gekennzeichnet ist, und wobei das Verfahren ferner durch folgende Schritte gekennzeichnet ist:
Betreiben des Benutzerendgeräts, um eine Dienstanforderung an eine Videoprogrammierungsquelle zu stellen, die durch das Satelliten-Sende-/Empfangsgerät zu einem terrestrischen Gateway (8) über zumindest einen Satelliten mit einer nicht-geosynchronen Umlaufbahn (7) des Satellitenkommunikationssystems mit einer nicht-geosynchronen Umlaufbahn (7, 8) gesendet wird;
Weiterleiten der Dienstanforderung von dem Gateway zu der Videoprogrammierungsquelle, die die Dienstanforderung erfüllen soll; und
Erfüllen der Dienstanforderung durch Verwenden eines vorbestimmten Kriteriums, um selektiv eine Videoprogrammierung von der Quelle über einen Satelliten mit einer geosynchronen Umlaufbahn (1) und den Satellitenempfänger zu dem Videoempfänger oder über den zumindest einen Satelliten mit einer nicht-geosynchronen Umlaufbahn (7) und das Satelliten-Sende-/Empfangsgerät zu dem Videoempfänger zu senden.

## Revendications

1. Système de télécommunication, comprenant :
un premier système de satellites (1, 3) qui fournit un service de communication de radiotéléphonie (5) dans une zone de service terrestre,
un deuxième système de satellites (7, 8) qui fournit un service de communication bilatérale (9, 10) dans au moins une partie de la zone de service terrestre, et
un terminal d'utilisateur (6) qui comprend un émetteur-récepteur pour faire des requêtes de service de radiotéléphonie, par l'intermédiaire dudit deuxième système de satellites (7, 8) et qui comprend, en outre, un récepteur pour recevoir le service de communication de radiotéléphonie qui a été demandé par l'intermédiaire du premier système de satellites (1, 3),
**caractérisé en ce que**
on prévoit une liaison de communication bidirectionnelle (14,16) entre ledit premier système de satellites (1, 3) et ledit deuxième système de satellites (7, 8) et
**en ce que** ledit premier système de satellites (1, 3) comprend un gestionnaire de segment au sol (3) pour utiliser des critères prédéterminés pour router, de manière sélective, le service de radiotéléphonie qui a été demandé audit terminal d'utilisateur (6) en transmettent le service de radiotéléphonie qui a été demandé sur une liaison ascendante (4) vers un satellite (1) dudit premier système de satellites (1, 3) ou en transmettant le service de radiotéléphonie qui a été demandé sur ladite liaison de communication bidirectionnelle (14,16) vers le deuxième système de satellites (7, 8) pour la réception par ledit émetteur-récepteur.

2. Système de télécommunication selon la revendication 1, dans lequel le premier système de satellites (1, 3) est **caractérisé par** au moins un satellite (1) qui est en orbite autour de la terre à une altitude qui est supérieure à celle des satellites (7) du deuxième système de satellites (7, 8).

3. Système de télécommunication selon la revendication 1 ou 2, dans lequel le premier système de satellites (1, 3) est **caractérisé par** au moins un satellite (1) qui est en orbite autour de la terre selon une orbite géosynchrone et dans lequel le deuxième système de satellites (7, 8) est constitué d'une pluralité de satellites (7) qui sont en orbite autour de la terre selon une orbite qui n'est pas géosynchrone.

4. Système de télécommunication selon l'une quelconque des revendications précédentes, dans lequel ledit deuxième système de satellites (7, 8) et ledit terminal d'utilisateur (6) peuvent fonctionner ensemble pour faire un enregistrement chronologique dans ledit terminal d'utilisateur (6) vers ledit système de télécommunication et pour déterminer un état de nomade/non nomade dudit terminal d'utilisateur (6).

5. Système de télécommunication selon l'une quelconque des revendications précédentes, dans lequel le service communication de radiotéléphonie (5) transporte des paquets de données vers ledit terminal d'utilisateur (6) à partir d'un réseau de communication de données qui est relié audit premier système de satellites (1, 3).

6. Système de télécommunication selon la revendication 5, dans lequel lédit deuxième système de satellites (7, 8) transporte des paquets de données vers ledit terminal d'utilisateur (6) à partir d'un réseau de communication de données qui est relié audit premier système de satellites (1, 3).

7. Système de télécommunication selon l'une quelconque des revendications 1 à 4, dans lequel le service communication de radiotéléphonie (5) transporte des paquets de données vers ledit terminal d'utilisateur (6) à partir d'un serveur sur Internet qui est relié audit premier système de satellites (1, 3) par l'intermédiaire d'un fournisseur de service sur Internet (20).

8. Système de télécommunication selon la revendication 7, dans lequel ledit deuxième système de satellites (7, 8) transporte des paquets de données vers ledit terminal d'utilisateur (6) à partir d'un serveur sur Internet qui est relié audit premier système de satellites (1, 3) par l'intermédiaire d'un fournisseur de service sur Internet (20).

9. Système de télécommunication selon l'une quelconque des revendications précédentes, dans lequel le service communication de radiotéléphonie (5) transporte des signaux de télévision vers ledit terminal d'utilisateur (6).

10. Système de télécommunication selon la revendication 1, dans lequel le service de communication bilatérale (9, 10) est **caractérisé par** un service de communication birectionnelle de point à point.

11. Système de télécommunication selon la revendication 10, dans lequel la liaison de communication bidirectionnelle (14, 16) est **caractérisée par** une liaison entre un gestionnaire de segment au sol dudit premier système de satellites (1, 3) et un gestionnaire de segment au sol dudit deuxième système de satellites (7, 8).

12. Système de télécommunication selon la revendication 11, dans lequel l'émetteur-récepteur effectue une requête de service pour établir une connexion avec un serveur de réseau de communication de données qui est relié de manière bidirectionnelle avec ledit gestionnaire de segment au sol dudit premier système de satellites (1, 3).

13. Système de télécommunication selon la revendication 11, dans lequel l'émetteur-récepteur effectue une requête de service pour établir une connexion avec un serveur sur Internet qui est relié de manière bidirectionnelle avec ledit gestionnaire de segment au sol dudit premier système de satellites (1, 3) par l'intermédiaire d'un fournisseur de service sur Internet (20).

14. Système de télécommunication selon la revendication 11, dans lequel l'émetteur-récepteur effectue des requêtes pour établir une connexion avec un fournisseur de service de radiotéléphonie qui est relié audit gestionnaire de segment au sol dudit premier système de satellites (1, 3).

15. Procédé pour fournir des données à un terminal d'utilisateur (6) dans un système de télécommunication basé sur des satellites, comprenant les étapes suivantes :
faire fonctionner le terminal d'utilisateur (6) pour faire un enregistrement chronologique dans le système de communication en utilisant l'enregistrement chronologique dans des protocoles d'un système de communication par satellites se trouvant sur une orbite qui n'est pas géosynchrone (7, 8) ;
faire fonctionner le terminal d'utilisateur (6) pour faire une requête de service au système de communication en utilisant un protocole de requête de service du système de communication par satellites se trouvant sur une orbite qui n'est pas géosynchrone (7, 8) ; et
en réponse à la requête de service, établir une liaison avec une source de données qui est relié à un système de communication par satellite par radiotéléphonie (1, 3), **caractérisé en ce que** le procédé comprend en outre les étapes suivantes :
utiliser un critère prédéterminé, fournir, de manière sélective, des données en provenance de la source de données au terminal d'utilisateur (6) par l'intermédiaire d'au moins un satellite (7) du système de communication par satellites se trouvant sur une orbite qui n'est pas géosynchrone (7, 8) ou fournir des données en provenance de la source de données au terminal d'utilisateur (6) par l'intermédiaire d'au moins un satellite (1) du système de communication par satellite par radiotéléphonie (1, 3).

16. Procédé selon la revendication 15, dans lequel l'étape de fonctionnement du terminal d'utilisateur (6) pour faire un enregistrement chronologique comprend une opération de localisation de position à un point d'accès terrestre (8) pour déterminer un emplacement du terminal d'utilisateur (6).

17. Procédé selon la revendication 15, dans lequel l'étape de fonctionnement du terminal d'utilisateur (6) pour faire un enregistrement chronologique comprend une opération de localisation de position à un point d'accès terrestre (8) pour déterminer un état nomade/non nomade du terminal d'utilisateur (6).

18. Procédé selon l'une quelconque des revendications 15 à 17, dans lequel l'étape de fourniture sélective comprend la détermination d'au moins un nombre de multiplets de données à fournir.

19. Procédé selon l'une quelconque des revendications 15 à 18, dans lequel l'étape de fourniture sélective comprend la détermination d'au moins un type de données à fournir.

20. Procédé selon l'une quelconque des revendications 15 à 19, dans lequel l'étape de fourniture sélective comprend la détermination du fait que le terminal d'utilisateur (6) est autorisé à recevoir les données par l'intermédiaire d'au moins un satellite (7) du système de communication par satellites se trouvant sur une orbite qui n'est pas géosynchrone (7, 8) ou au moins un satellite (1) du système de communication par satellite par radiotéléphonie (1, 3).

21. Procédé selon l'une quelconque des revendications 15 à 20, dans lequel l'étape de fourniture sélective comprend la détermination du fait que le terminal d'utilisateur (6) est autorisé à recevoir les données en provenance de la source de données.

22. Procédé selon l'une quelconque des revendications 15 à 21, dans lequel le terminal d'utilisateur (6) est un terminal d'utilisateur fixe ou un terminal d'utilisateur mobile.

23. Procédé selon l'une quelconque des revendications 15 à 22, dans lequel, dans le cas où les données sont fournies par l'intermédiaire d'un satellite (1) du système de communication par satellite par radiotéléphonie (1, 3), le procédé est **caractérisé en outre par** le fait de réaliser en même temps une connexion téléphonique vers le terminal d'utilisateur (6) par l'intermédiaire d'au moins un satellite (7) du système de communication par satellites se trouvant sur une orbite qui n'est pas géosynchrone (7, 8).

24. Procédé selon la revendication 15, dans lequel le terminal d'utilisateur (6) est **caractérisé par** un processeur de données qui est relié à un émetteur-récepteur de satellite et à un récepteur de satellite et dans lequel le procédé est **caractérisé en outre par** les étapes suivantes :
faire fonctionner le processeur de données pour effectuer une requête de service sur Internet qui est transmise par l'intermédiaire de l'émetteur-récepteur du satellite vers un point d'accès terrestre (8) par l'intermédiaire d'au moins un satellite (7) se trouvant sur une orbite qui n'est pas géosynchrone ;
relayer la requête de service sur Internet du point d'accès vers une entité Internet qui doit réaliser la requête de service ; et
réaliser la requête de service sur Internet en transmettant des données en provenance de l'entité Internet vers le processeur de données par l'intermédiaire d'un satellite (1) se trouvant sur une orbite géosynchrone et du récepteur du satellite.

25. Procédé selon la revendication 24, dans lequel l'étape de réalisation comprend une étape de sélection du trajet basée sur au moins une des natures des données ou un montant de données à transmettre.

26. Procédé selon la revendication 15, dans lequel le terminal d'utilisateur (6) est **caractérisé par** un émetteur-récepteur de satellite, un récepteur de satellite et un récepteur de signaux vidéo et dans lequel le procédé est en outre **caractérisé par** les étapes suivantes :
faire fonctionner le terminal d'utilisateur (6) pour faire une requête de service à une source de programmation de vidéo qui est transmise par l'intermédiaire l'émetteur-récepteur du satellite à un point d'accès terrestre (8) par l'intermédiaire d'au moins un satellite (7) du système de communication par satellites se trouvant sur une orbite qui n'est pas géosynchrone (7, 8) ;
relayer la requête de service du terminal d'utilisateur (6) à la source de programmation de vidéo qui doit réaliser la requête de service ; et
réaliser la requête de service en utilisant un critère prédéterminé pour transmettre de manière sélective un programme de vidéo en provenance de la source vers le récepteur de vidéo par l'intermédiaire d'un satellite (1) qui se trouve sur une orbite géosynchrone et du récepteur de satellite ou vers le récepteur de vidéo par l'intermédiaire d'au moins un satellite (7) qui se trouve sur une orbite qui n'est pas géosynchrone et de l'émetteur-récepteur de satellite.
